# EUROPEAN PATENT APPLICATION

(11) **EP 2 690 858 A1**
(43) Date of publication of application: **29.01.2014**
(21) Application number: 11861680.4
(22) Date of filing: 24.03.2011
(51) Int. Cl.: H04N 5/00, H04N 7/173

(54) **INFORMATION PROCESSING DEVICE, INFORMATION PROCESSING METHOD AND PROGRAM**

(71) Applicant: Fujitsu Limited, Kawasaki-shi, Kanagawa 211-8588 (JP)
(72) Inventor: UCHIDA, Yoshiaki, Yokohama-shi Kanagawa 222-0033 (JP)
(74) Representative: Stebbing, Timothy Charles
(86) International application number: PCT/JP2011/057261
(87) International publication number: WO 2012/127693

(57) **Abstract**

This information processing device is provided with the following: a reception unit that receives either a channel designation that designates, as the broadcast channel to be received, a single channel number designated by a plurality of numbers or a channel designation that designates a plurality of channel numbers using a number string that includes symbols corresponding to a plurality of numbers; and a selection unit that selects a broadcast channel, identified by prescribed criteria, from amongst the broadcast channels indicated by the plurality of channel numbers in the channel designation that designates a plurality of channel numbers.

## Description

### FIELD

The embodiments discussed herein are related to an information processing with respect to reception of broadcasting.

### BACKGROUND

A cable TV, IP (Internet Protocol) TV, satellite broadcasting, terrestrial digital broadcasting, etc are multichannel broadcasting as compared with conventional TV broadcasting. In the multichannel broadcasting, services are provided via several tens or more of channels, and information for specifying the channel, e.g., a channel number takes 3 digits in many cases. In the multichannel broadcasting, further the channel number is changed due to a change of program scheduling as the case may be.

On the other hand, the following designation methods are often adopted for designating the channel viewed by a user in a TV receiver. A first designation method is attained such that, e.g., the user operates an up-key of the channel number and a down-key of the channel number. A second designation method is attained such that, e.g., the user directly inputs the channel number by pressing a number key etc.

By the way, except the users who are well-experienced in the multichannel broadcasting, it is difficult for the users to memorize the channel numbers of the multichannel broadcasting. Further, it is time-consuming to designate the channel number of, e.g., three or more digits each time or to select the channel by the up-key/down-key of the channel number. Such being the case, the channel selection using one-touch channel selection key is preferred especially in the multichannel broadcasting. The "channel selection using the one-touch channel selection key" is defined as a channel selection method of allocating the designation of one broadcasting channel to one key. When the user presses the one-touch channel selection key, the broadcasting channel allocated to the pressed one-touch channel selection key is immediately selected.

### [Documents of Prior Arts]

### [Patent document]

[Patent document 1] Japanese National Publication of International Patent Application No.2009-530893
[Patent document 2] Japanese Laid-open Patent Publication No.08-149383
[Patent document 3] Japanese Laid-open Patent Publication No.2004-336665

### Summary

If trying to solve the problem in the multichannel broadcasting by the one-touch channel selection key, there is a possibility that the following problems further arise. At first, the operation of allocating the specified channels to plural pieces, e.g., ten or twelve pieces of one-touch channel selection keys might be a time-consuming operation to the user as a new subscriber. This is because which channel is mainly viewed is undetermined when allocating the one-touch channel selection keys in many cases.

This being the case, there is a method by which a service provider provides a default channel list (program arrangement) to the users in order to facilitate the setting when making a new subscription. This method is actually implemented in the terrestrial digital broadcasting. In the case of being based on the default channel list also, there is the possibility that the following problems arise.

A first problem is that it is difficult for the service provider to decide which broadcasting channels are recommended as the broadcasting channels in the channel list from within about 100 broadcasting channels or 100 or more broadcasting channels in some cases. A second problem is that viewers of fee-broadcasting make the subscriptions of a variety of plans, and hence the individual users are not necessarily enabled to view the channels given in the default channel list.

Therefore, some service providers do not provide the default lists as the case may be.

Moreover, it is considered that the default setting is done on the side of the receiver when shipped. After being shipped, however, the program scheduling will have been changed till reaching a point of time when the user starts viewing in some cases. Then, the user might not view the broadcasting program in the default setting when shipped.

Still further, if being an apparatus that supports the Internet, it is considered to download the default channel list from a web site etc of a maker of the receiver. The setting of the one-touch channel selection keys may be registered in the receiver by getting the downloaded channel list recognized by the receiver. In the case of downloading such as this, it is feasible to create the proper channel list corresponding to the plan of the viewing subscription of the user. There is, however, a possibility that the maker gets burdened with providing such a service stably for a long period of time.

Moreover, if the channel number registered in the one-touch channel selection key is changed due to the change of the channel scheduling, selecting the channel and viewing are disabled by use of the one-touch channel selection key in some cases. For instance, there can be exemplified a case in which the service using the channel number set in the one-touch channel selection key expires or a case of becoming an unsubscribed premium channel. If designating the unsubscribed premium channel, it follows that an error saying "this channel cannot be received at the present" is displayed.

For example, it is assumed that a channel "205" is set in the one-touch channel selection key "2" in a state where channels "201", "205" and "209" are in service. Then, it is also assumed that the channel scheduling is changed, and the channels "202", "203", "207" and "209" get in service. When the user presses the one-touch channel selection key "2" after changing the channel scheduling, the selected channel "205" does not exist, so that the user will be prompted to confirm by use of a determination key or an OK key after (1) canceling the input or (2) displaying the error dialog. It follows that the user checks how the broadcasting channel requested by the user himself or herself is changed and performs resetting newly.

Moreover, it is considered that a broadcasting station that will be scheduled to open in the future and channel numbers thereof are retained as a database, and the channel numbers, when displaying these channel numbers allocated to the one-touch channel selection keys, are displayed in distinction between the broadcasting being already started and the broadcasting scheduled to start in the future. It is, however, difficult to cover thoroughly the channel numbers of the broadcasting station scheduled to start in the future at the point of time when manufacturing and shipping the receiver.

Furthermore, the allocation of the channel numbers differs on a region-by-region basis. Therefore, even if an outline of the allocation of the channel numbers can be determined by prefecture codes and region codes, the users residing over borders therebetween do not necessarily view the broadcasting channels based on the region codes. Hence, such a case might arise that the information indicating whether the broadcasting has already been started or will be scheduled to start in the future might not be properly displayed to the users residing over the borders therebetween. Originally, the channels of the station scheduled to start are the channels that might not yet be viewed. Therefore, it is hard to consider that the channels of the station scheduled to start in the future are allocated to the one-touch channel selection keys in the default setting when shipping the receiver. These problems still exist in the designation of the variety of broadcasting channels of the TV, the radio, etc.

The technology of the disclosure aims at providing a technology capable of simply designating a broadcasting channel desired to view by a user and reducing a load on the simple designation in multichannel broadcasting having a larger number of channels than in the conventional broadcasting.

One aspect of the technology of the disclosure can be exemplified as an information processing apparatus to receive the broadcasting. The present information processing apparatus includes:
an accepting unit to accept channel designation for designating one channel number specified by a plurality of numerals as a broadcasting channel to be received or channel designation for designating a plurality of channel numbers by a numeral string containing symbols corresponding to the plurality of numerals as the broadcasting channels to be received; and a channel selecting unit to select the broadcasting channel that is specified by a predetermined criterion in the broadcasting channels specified by the plurality of channel numbers in the channel designation for designating the plurality of channel numbers.

### [Effects of the invention]

According to the present information processing apparatus, it is feasible to simply designate the broadcasting channel desired to view by the user and reduce the load on the simple designation even in the broadcasting containing more multiple channels than in the conventional broadcasting.

### Brief Description of the Drawings

[FIG.1] FIG. 1 is one example of a flowchart illustrating a channel selection process;
[FIG.2] A flowchart illustrating one example of details of a process of storing a channel selected by one-touch channel selection in a parameter indicating a channel to be selected next;
[FIG.3] FIG. 3 is one example of a block diagram illustrating a configuration of a receiving apparatus;
[FIG.4] A diagram of an example of a configuration in a case where the receiving apparatus is used for receiving IP broadcasting;
[FIG.5] A flowchart illustrating one example of a program selection process in the IP broadcasting;
[FIG. 6] A diagram of one example of an outline drawing depicting a configuration of a remote controller;
[FIG. 7] A diagram of one example of the broadcasting channels sorted on a genre-by-genre basis;
[FIG. 8] A diagram of one example of a one-touch channel selection table;
[FIG. 9] A diagram of one example of the one-touch channel selection table in which a "character representing an arbitrary numeral" is contained in the designation of the one-touch key; [FIG. 10] A diagram of another example of the one-touch channel selection table;
[FIG. 11] A diagram of a setting example of the one-touch channel selection table in the receiving apparatus when shipped from a factory;
[FIG. 12] A diagram of an example of a channel selection list containing receivable broadcasting stations;
[FIG. 13] A flowchart illustrating a processing example of direct channel selection;
[FIG. 14] A flowchart illustrating details of other processes other than the direct channel selection;
[FIG. 15] A flowchart illustrating details of a verifying process;
[FIG. 16] A flowchart illustrating an example 1 of the setting process of the one-touch channel selection table;
[FIG. 17] A flowchart illustrating an example 2 of the setting process of the one-touch channel selection table;
[FIG. 18] A diagram of example of the one-touch channel selection table according to a second working example;
[FIG. 19] A diagram of one example of details of other processes other than the direct channel selection;
[FIG. 20] A flowchart illustrating details of the verifying process; and
[FIG. 21] A diagram of a processing example of setting the one-touch channel selection table by use of numeric values.

### DESCRIPTION OF EMBODIMENTS

A receiving apparatus according to one embodiment will hereinafter be described with reference to the drawings. A configuration of the following embodiment is an exemplification, and the present receiving apparatus is not limited to the configuration of the embodiment.

### <Comparative Example>

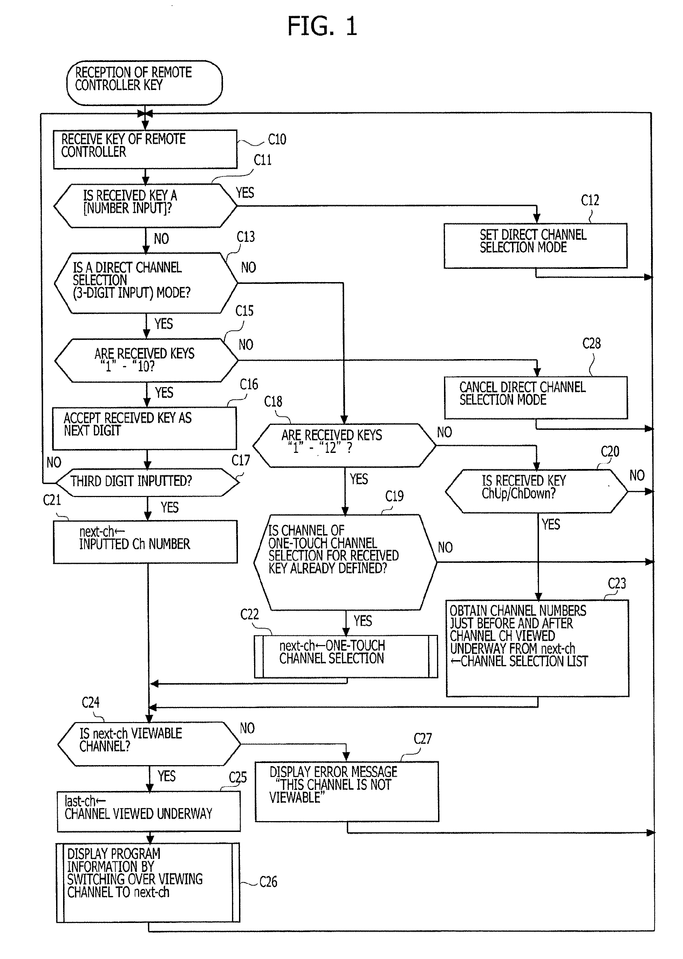

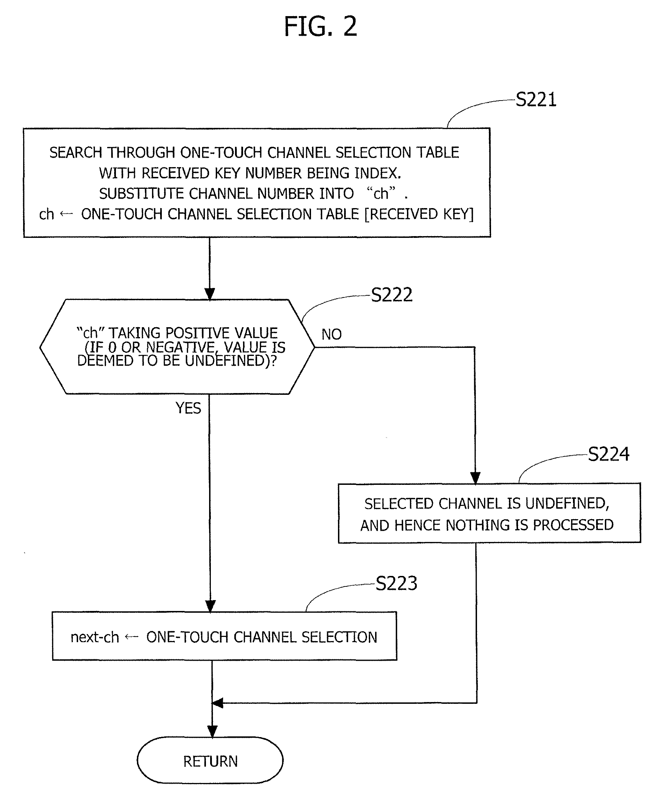

A procedure of a broadcasting channel receiving process according to a comparative example will be exemplified with reference to FIGS. 1 and 2. FIG. 1 is one example of a flowchart illustrating a channel selection process such as making a direct channel selection, making a one-touch channel selection, pressing a channel number up-key and pressing a channel number down-key, etc.

Herein, an assumption is that the receiving apparatus acquires beforehand information such as a NIT (Network Information Table) and a BIT (Broadcast Information Table), etc, and the information for receiving a broadcasting channel defined as a channel selection target is stored in a storage unit of the receiving apparatus in a format of channel selection lists. Further, it is also assumed that the channel selection lists are sorted in the sequence of channel numbers. Herein, the NIT contains items of information on a network for transmitting broadcast programs, such as the channel numbers, the modulation method and a guard interval (GI) . Moreover, the BIT contains regenerative periods of service information such as broadcasting station identifying information, grouping information and the NIT, etc. Furthermore, it is also assumed that, for example, one-touch channel selection channels are defined by initial setting etc when purchasing the receiving apparatus. The processes of the receiving apparatus will hereinafter be described by assuming a case where a user performs an operation in a way that uses a remote controller (which will be abbreviated to RC in the drawings).

When the user operates a key of the remote controller, the remote controller transmits information of the key undergoing the operation to the receiving apparatus. The transmission is based on, e.g., infrared-rays etc. Thereupon, the receiving apparatus receives the key information transmitted from the remote controller (C10).

Then, the receiving apparatus determines whether the received key information is key information for specifying "number input" or not (C11) . The information of the received key will hereinafter be simply called the received key. If the received key is defined as the key information for specifying the "number input", the receiving apparatus sets a channel selection mode to a direct channel selection mode (C12). The "channel selection mode" connotes a type of a processing procedure when accepting an operation of the channel selection by the user. The "direct channel selection mode" connotes a processing procedure of specifying the broadcasting channel with a number string, e.g., 3-digit numerals through user's inputting the number key etc of the remote controller. After the process in C12, the receiving apparatus loops back the control to C10.

Whereas if the received key is not the key information of the "number input", the receiving apparatus determines whether the present channel selection mode is the direct channel selection mode or not (C13). If the present channel selection mode is the direct channel selection mode, the receiving apparatus executes the following direct channel selection process (C15 - C17, C28).

The direct channel selection mode involves determining whether or not the received key corresponds to any one of the numerals of "1" through "10" (C15). Then, if the received key is not any one of the numerals of "1" through "10", the receiving apparatus cancels the direct channel selection mode (C28), and loops back the control to C10.

Whereas if the received key is determined in C15 to be any one of the numerals of "1" through "10", the receiving apparatus receives the received key as a next digit and stores the received key in the storage unit (C16). Then, the receiving apparatus determines whether, e.g., the third digit is inputted or not (C17). Note that what is exemplified herein is a case of specifying the broadcasting channel with the 3-digit numerals. The specifying of the broadcasting channel is not, however, limited to the specifying based on the 3-digit numerals. If the third digit is not inputted, the receiving apparatus loops back the control to C10 and iterates the key input process. Whereas if the third digit is inputted, the receiving apparatus stores the inputted 3-digit numerals as the number of the broadcasting channel in a parameter, e.g., "next-ch", indicating the channel to be selected next (C21). Then, the receiving apparatus advances the control to C24.

Further, if the present channel selection mode is determined in C13 not to be the direct channel selection mode, the receiving apparatus determines whether the received key is any one of the numerals of "1" through "12" or not (C18). If the received key is any one of the numerals of "1" through "12", the receiving apparatus determines whether the channel obtained by the one-touch channel selection with respect to the received key has already been defined or not (C19). Then, if the channel obtained by the one-touch channel selection with respect to the received key has already been defined, the receiving apparatus acquires the channel of the one-touch channel selection with respect to the received key from, e.g., the table in the main storage device, and recognizes this acquired channel of the one-touch channel selection as the specified channel. A process corresponding to the user's operation such as this is referred to as the one-touch channel selection. Then, the receiving apparatus executes the process of storing the channel obtained by the one-touch channel selection in the parameter, e.g., "next-ch", indicating the channel to be selected next (C22). Then, the receiving apparatus advances the control to C24.

Moreover, if the received key is determined in C18 to be none of the numerals of "1" through "12", the receiving apparatus determines whether the received key is the channel number up-key or the channel number down-key (C20). Then, if the received key is the channel up-key or the channel down-key, the receiving apparatus increments or decrements the number of the broadcasting channel in a way that corresponds to the received key, and stores the incremented or decremented number in the parameter, e.g., "next-ch", indicating the channel to be selected next (C23). Subsequently, the receiving apparatus advances the control to C24.

If the received key is determined in C20 to be neither the channel number up-key nor the channel number down-key, the receiving apparatus loops back the control to C10. Further, if the channel of the one-touch channel selection with respect to the received key is determined in C19 not to be already defined, the receiving apparatus also loops back the control to C10.

It is determined C24 whether the next broadcasting channel number stored in the parameter "next-ch" indicates a viewable broadcasting channel or not (C24). Then, if the next broadcasting channel number is the viewable broadcasting channel number, the receiving apparatus stores the broadcasting channel number being viewed underway at the present in a parameter, e.g., "last-ch" (C25). Then, the receiving apparatus receives a program by switching over the viewing channel to the next broadcasting channel stored in the parameter "next-ch", and displays the received program information (broadcasting program etc) on a display device (C26). Thereafter, the receiving apparatus loops back the control to C10.

Whereas if the next broadcasting channel number is determined in C24 not to be the viewable broadcasting channel number, the receiving apparatus displays an error message indicating that "this channel is not viewable" on the display device (C27), and loops back the control to C10.

FIG. 2 is a flowchart illustrating one example of details of the process (the one-touch channel selection process in C22 of FIG. 1) of storing the channel given by the one-touch channel selection in the parameter indicating the next broadcasting channel. In this process, the receiving apparatus searches through a one-touch channel selection table with the received key number serving as an index. Then, the broadcasting channel number, which has been searched for with the received key being used as the index, is stored in a parameter "ch" (C221). The broadcasting channel number, which has been searched for with the received key being used as the index, can be said to be the broadcasting channel number obtained by the one-touch channel selection.

Then, the receiving apparatus determines whether the value stored in the parameter "ch" is a positive value or not (C222). Subsequently, if the value stored in the parameter "ch" is the positive value, the receiving apparatus stores the value of the parameter "ch", i.e., the broadcasting channel number undergoing the one-touch channel selection in the parameter "next-ch" (C223). Then, the receiving apparatus finishes the one-touch channel selection process. Whereas if the value stored in the parameter "ch" is not the positive value, the receiving apparatus performs nothing because of the channel of the channel selection being undefined, and terminates the one-touch channel selection process (C224). Thereafter, the receiving apparatus loops back the control to the process in FIG. 1(next to C22).

Thus, according to the process in the comparative example, the direct channel selection, the one-touch channel selection, etc function on the premise that the information for receiving the broadcasting channel as the channel selection target is stored in the format of the channel selection list in the storage unit of the receiving apparatus. Conversely for executing the processes in FIGS. 1 and 2, it follows that the user, the maker of the receiving apparatus or the broadcasting organization, etc conduct an operation for maintaining the information for receiving the broadcasting channel defined as the channel selection target.

### [Example 1]

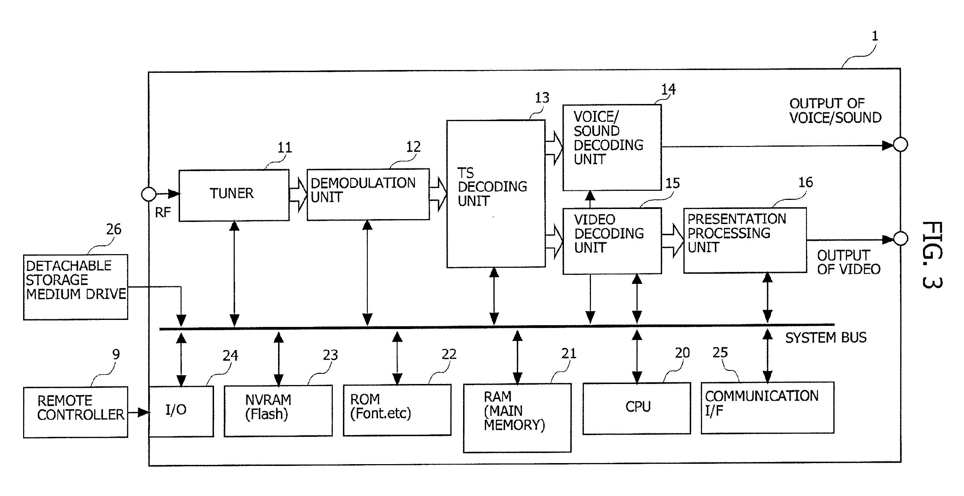

A receiving apparatus 1 according to a first working example (example 1) will hereinafter be described with reference to FIGS. 3 through 20. The receiving apparatus 1 is one example of an information processing apparatus.

### <System Architecture etc>

FIG. 3 is one example of a block diagram illustrating a configuration of the receiving apparatus 1. As in FIG. 3, the receiving apparatus 1 includes function blocks such as a tuner 11, a demodulation unit 12, a TS (Transport Stream) decoding unit 13, a voice/sound decoding unit 14, a video decoding unit 15, a presentation processing unit 16, etc. These function blocks are realized by LSIs (Large Scale Integrated circuits) dedicated to receiving the broadcasts. Any one or all of the function blocks (ranging from the tuner 11 to the presentation processing unit 16) may be realized in such a way that a processor like a DSP (Digital Signal Processor) executes a computer program deployed in a executable manner on the main storage device.

Functions of the function blocks described above are specified by the standards of IP broadcasting, terrestrial digital broadcasting, satellite broadcasting, CATV (Cable Television), etc and will hereinafter be therefore briefly outlined. The tuner 11 selects the broadcasting channel designated by the user and acquires broadcasting signals from an interface of an unillustrated cable TV, an unillustrated antenna or an interface connected to a LAN (Local Area Network) . The tuner 11 is also called a channel selection unit. The demodulation unit 12 acquires the signals of the broadcasting channel selected by the tuner 11, and demodulates modulation signals modulated by a standard modulation method, e.g., an OFDM (Orthogonal Frequency Division Multiplexing). The TS decoding unit 13 acquires TS (Transport Stream) from within the demodulated signals. The voice/sound decoding unit 14 decodes voice/sound data from the TS and reproduces the voice signals or the sound signals via, e.g., an unillustrated speaker. The video decoding unit 15 decodes a video (picture) from the TS. The video decoding unit 15 reproduces picture frames according to the standards such as MPEG (Moving Picture Experts Group) . The presentation processing unit 16 outputs, based on the decoded picture frames, the video on the unillustrated display device. As described above, the receiving apparatus 1 executes the broadcasting channel receiving process through the function blocks ranging from the tuner 11 to the presentation processing unit 16.

In FIG. 3, the receiving apparatus 1 includes, other than the components given by way of the function blocks from the tuner 11 to the presentation processing unit 16, hardware components such as a CPU (Central Processing Unit) 20, a RAM (Random Access Memory) 21, a ROM (Read Only Memory) 22, NVRAM (Non-Volatile Random Access Memory) 23, an I/O (Input/Output) interface 24, a communication interface 25 and a detachable storage medium drive 26. These hardware components and the function blocks from the tuner 11 to the presentation processing unit 16 are accessible to each other via a system bus.

The CPU 20 executes the computer program deployed in the executable manner on the RAM 21, thereby providing a variety functions of the receiving apparatus 1, e.g., a user interface and thus accepting the user's operation. The user's operation to be accepted is exemplified such as designating the broadcasting channel, setting an environment of the receiving apparatus 1 and performing an adjusting operation of the hardware, etc.

Note that FIG. 3 illustrates the function blocks from the tuner 11 to the presentation processing unit 16 as the components different from the CPU 20, however, the CPU 20 may also realize any one or more of the function blocks from the tuner 11 to the presentation processing unit 16 by executing, e.g., the computer program deployed in the executable manner on the RAM 21. Namely, the CPU 20 may execute both of the process of the user' s operation and the broadcasting program receiving process.

The RAM 21 is stored with, e.g., the computer program executed by the CPU 20 and data etc processed by the CPU 20. The ROM 22 is stored with, e.g., system programs such as OS (Operating System), BIOS (Basic Input/Output System) or character fonts etc. The NVRAM 23 is, e.g., a flash memory and saves the parameter set by the user or various items of control information acquired via the communication interface 25, etc.

The I/O interface 24 has, e.g., an infrared-ray receiver etc and performs the communications with the remote controller 9. For example, the I/O interface 24 receives a key operation signal generated by operating a key on the remote controller 9, and notifies the CPU 20 of this key operation signal.

The communication interface 25 accesses, e.g., the LAN or the wireless LAN and performs the communications with the communication device on an unillustrated communication network. For instance, the communication interface 25 acquires an EPG (Electronic Program Guide) etc on the Internet and hands over the EPG to the CPU 20. Further, the communication interface 25 receives the broadcasting waves of the IP broadcasting and may hand over the broadcasting waves to the tuner 11, the modulating unit 12 or the TS decoding unit 13, etc. Moreover, the communication interface 25 is used for installing or backing up the control program, the control data, etc of the receiving apparatus 1.

The detachable storage medium drive 26 is a drive for a Blu-ray disc, a DVD (Digital Versatile Disk), a flash memory card, etc. The detachable storage medium drive 26 is used for installing or backing up the control program, the control data, etc of the receiving apparatus 1.

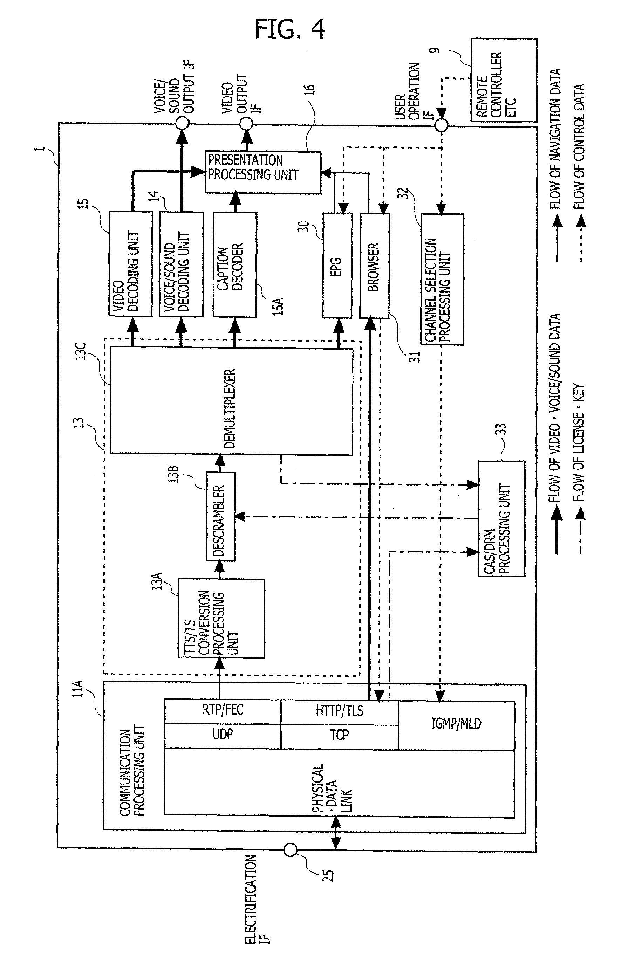

FIG. 4 is an example of a configuration in a case where the receiving apparatus 1 is employed for receiving the IP broadcasting. In the example of FIG. 4, as compared with FIG. 3, a communication processing unit 11A is used in place of the tuner 11 and the demodulation unit 12. The communication processing unit 11A receives the data of the broadcasting channel from an external network via the communication interface 25 on, e.g., a physical layer or a data link layer. The TS is acquired from stream data containing the video, the voice/sound, a caption, etc in the broadcasting channel data owing to communication functions hierarchized by, e.g., UDP (User Datagram Protocol), RTP (Real-time Transport Protocol) /FEC (Forward Error Correction), etc and then handed over to the TS decoding unit 13.

The TS decoding unit 13 includes TTS (Timestamped TS)/TS conversion processing unit 13A, a descrambler 13B and a demultiplexer 13C. The TTS/TS conversion processing unit 13A generates the TS synchronizing with a broadcasting station on the basis of the information of a timestamp in the TTS acquired from the communication processing unit 11A, i.e., on the basis of the information timestamped by a clock synchronizing with the broadcasting station as a sender.

The descrambler 13B queries a CAS (Conditional Access System)/DRM (Digital Rights Management) processing unit 33 and, if descrambling is permitted, descrambles the TS. The demultiplexer 13C demultiplexes the TS into the video, the voice/sound, the caption, etc and hands over these categories of data to the video decoder 15, the voice/sound decoder 14, a caption decoder 15A, etc.

On the other hand, the operation signal given from the remote controller 9 is processed by a channel selection processing unit 32 on the CPU 20 (see FIG. 3), and there is generated an instruction signal to an IGMP (Internet Group Management Protocol)/MLD (Multicast Listener Discovery) hierarchy of the communication processing unit 11A. Path control for having the broadcasting program distributed, which is selected by the user through the remote controller 9, is executed on the IGMP/MLD hierarchy of the communication processing unit 11A.

While on the other hand, the data broadcasting in the broadcasting program is acquired and handed over to a browser 31 on a TCP (Transmission Control Protocol) -HTTP (Hyper Text Transfer Protocol)/TLS (Transport Layer Security) hierarchy of the communication processing unit 11A.

Thus, the receiving apparatus 1, though it may be exemplified as the normal TV receiver as in FIG. 3, can be also exemplified as an IPTV receiver as in FIG. 4.

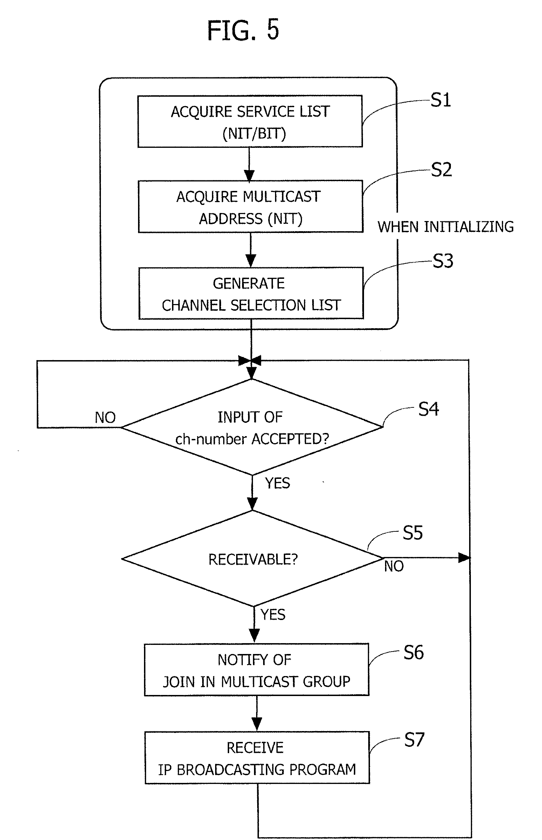

FIG. 5 is a flowchart illustrating one example of the program selection process on the IP broadcasting. The CPU 20 of the receiving apparatus 1 executes the computer program on the RAM 21 and controls the reception of the IP broadcasting in a procedure depicted in FIG. 5. In this process, the receiving apparatus 1 acquires information called a service list, to be specific, the NIT, the BIT, etc from an unillustrated server on the Internet via the communication interface 25 (S1) . Further, the receiving apparatus 1 acquires a multicast address (or a multicast group ID associated with the broadcasting channel) for receiving the data of the broadcasting channel (S2) . Then, the receiving apparatus 1 generates a channel selection list (S3). Herein, the channel selection list contains information that associates the channel numbers of the broadcasting channels with the multicast addresses (or the multicast group IDs associated with the broadcasting channels) .

Then, the receiving apparatus 1 stands by for the user's operation of inputting the channel number (S4). Subsequently, upon the input of the channel number, the receiving apparatus 1 refers to the channel selection list and thus determines whether the broadcasting channel of the inputted channel number is receivable or not (S5).

If the broadcasting channel of the inputted channel number is receivable, the receiving apparatus 1 acquires the multicast address (or the multicast group ID associated with the broadcasting channel) from the channel selection list, and notifies an unillustrated router of a join in the multicast on the network (S6). The join in the multicast is attained by transmitting, e.g., a Join message to the router. Then, when the Join message is accepted by the router which executes the multicast specified by the multicast address (or the multicast group ID associated with the broadcasting channel), multicast packets of the IP broadcasting are transmitted to the receiving apparatus 1. Then, the receiving apparatus 1 receives the IP broadcasting program (S7).

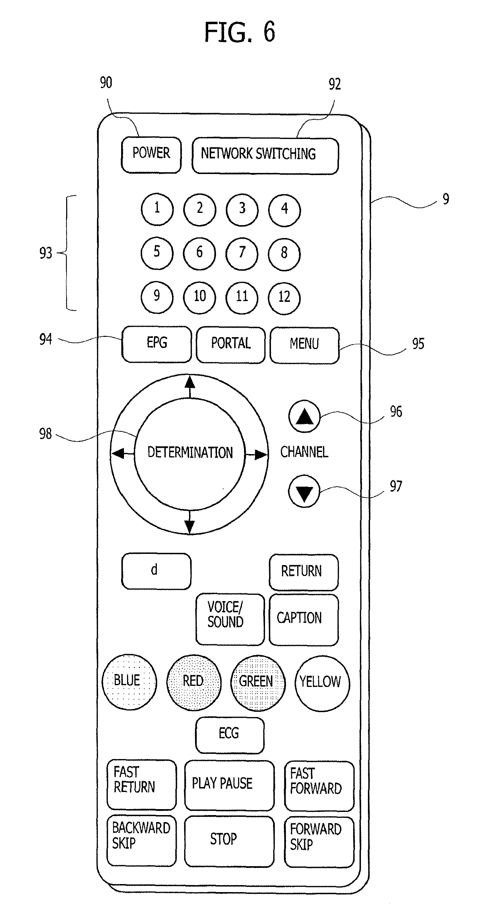

FIG. 6 is one example of an outline drawing that illustrates a configuration of the remote controller 9. As in FIG. 6, the remote controller 9 includes a power key 90, a network switching key 92, a number key group 93, an EPG (Electronic Program Guide) key 94, a portal key, a menu key 95, a channel number up-key 96, a channel number down-key 97, a cross key 98, etc. The keys will hereinafter be also called buttons.

The power key 90 is used for switching ON a power source of the receiving apparatus 1. The network switching key 92 is used for switching over the network via which the receiving apparatus 1 receives the data. For example, the network switching key 92 is employed for designating the switchover to, e.g., the LAN, the cable TV, the satellite broadcasting, the terrestrial digital broadcasting, etc.

The number key group 93 contains a plurality of keys attached with numerals of "a number 1" through "a number 12". In the number key group 93, the key attached with a number "k" (k represents 1 through 12 in FIG. 6) will hereinafter be simply called the number key "k". The EPG key 94 is employed for displaying the EPG on the display device. The portal key is used for displaying a portal site of the receiving apparatus 1. The switching-enabled networks such as the LAN, the cable TV, the satellite broadcasting and the terrestrial digital broadcasting are presented on the portal site.

The menu key 95 is used for displaying a variety of setting menus. For instance, when detecting the user's operation effected on the menu key 95, the receiving apparatus 1 displays a switching menu of the switchover to the direct channel selection mode, the one-touch channel selection mode, etc.

The channel number up-key 96 is used for designating an increment of the number in designating the channel number. Further, channel number down-key 97 is employed for designating a decrement of the number in designating the channel number. The cross key 98 is used for moving a cursor on the screen and shifting and selecting the list in the menu. The user determines a selective intension, in which case a determination key provided at the center of the cross key 98 is used.

Moreover, the remote controller 9 includes a "d" key, a "return" key, a "voice/sound" key, a "caption" key, a "blue" key, a "red" key, a "green" key, a "yellow" key, an "ECG (Electronic Content Guide)" key, a "fast return" key, a "play pause" key, a "fast forward" key, a "backward skip" key, a "stop" key, a "forward skip" key, etc. Omitted are explanations of operation keys other than the operation keys ranging from the power key 90 to the channel number down-key 97.

### <Descriptions of Channels>

The example 1 reduces a broadcasting channel designation problem in the multi-channel broadcasting by providing a "character representing an arbitrary numeral" in designating the broadcasting channel. Herein, the word "arbitrary" has an implication of not being limited to one numeral, and the designation based on the "character representing an arbitrary numeral" is designation that these characters may be used in the way of being replaced with any numerals among the numerals of, e.g., 0 through 9. The "character representing an arbitrary numeral" is one example of a symbol corresponding to one numeral selected from the plurality of numerals or a string of the numerals selected from the plurality of numerals.

In the example 1, as in FIG. 6, the assumption is that the remote controller 9 has the number keys "1" through "12". In the process of the receiving apparatus 1, however, it does not mean that the number keys are limited to "1" through "12". Further, in the example 1, the key "10" is treated as the numeral "0", and the key "11" is set as the key of the character representing an "arbitrary numeral". For representing the arbitrary numeral, e.g., the character "x" is displayed on the screen. It does not, however, mean that there is a limit to displaying the "character representing an arbitrary numeral", and other characters or special symbols (e.g., "?", "*", etc) may also be used.

Such a state is assumed that the broadcasting channels specified by, e.g., the numbers 201, 205 and 209 are in service. Herein, when user presses the keys "2", "10" and "11", the operation signals thereof are inputted to the receiving apparatus 1, and the receiving apparatus 1 interprets these signals to be "2", "0" and "x". Then, the receiving apparatus 1, as a result of checking the inputted character string "20x" against the receivable broadcasting channel numbers, extracts the channels specified by the numbers "201", "205 and "209" as the relevant broadcasting channels. Among these channels, e.g., according to a subscription plan of the user, the two channels "205 and "209" are the viewable channels, on which presumption the receiving apparatus 1 interprets that the user will have selected the channel having the smallest number "205".

Furthermore, it is assumed that after changing the channel scheduling with the result that the channels "202", "203", "207" and "209" are enabled to be in service. At this time, when conducting the same operation, any one channel viewable to the user is selected from within the channels "202", "203", "207" and "209". For example, the assumption is that the viewable channel is the channel "203" in the viewing region of the user. Then, the channel "203" is viewable, the designation of the channel "203" is not erroneous, and hence the channel "203" is selected.

Moreover, it is assumed that the channel in service will have been the channel "205" and actually changed to the channel "207" before changing the channel scheduling in the state where the channels"205", "207" and "209" are viewable in service. In this case, when the user inputs "2", "0" and " x ", the channel "205" is extracted as the relevant broadcasting channel for the first time. Even in the case of thus changing the channel scheduling, if the user recognizes changing the channel scheduling, it may be sufficient for the user to press the channel number up-key 96 once. Further, for instance, after changing the channel scheduling, if not providing the service at the channel "205", the receiving apparatus 1 can also immediately extract the channel "207" from the designation of "2" , "0" and "x".

This operation is more natural and is less of an uncomfortable feeling than in the case of displaying an error dialog such as "the service is not provided" or in case of no reaction with respect to the user's designation of the broadcasting channel. Resultantly, it is assumed that the operation may entail a smaller number of steps.

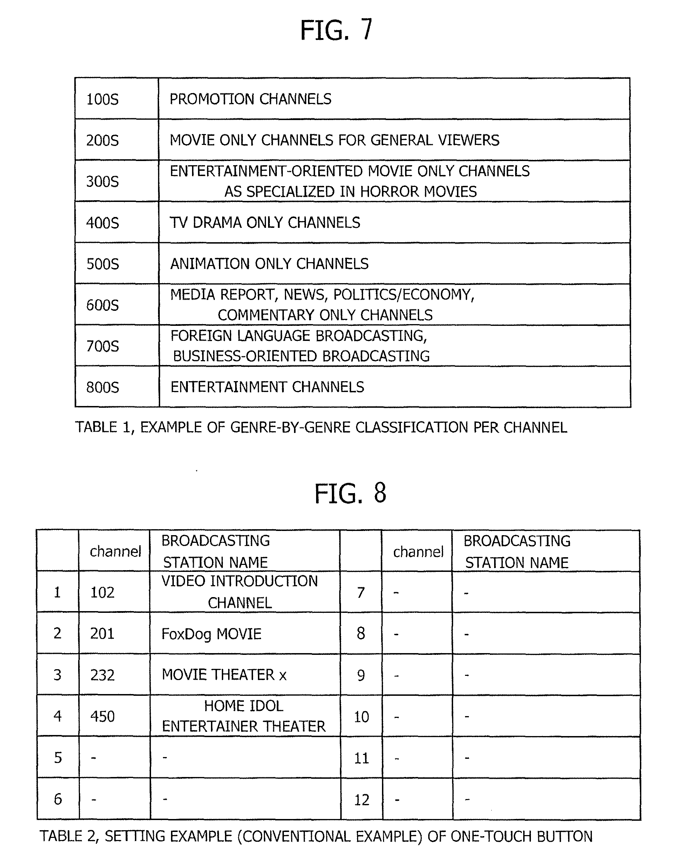

A reason for this is that the broadcasting channel numbers are sorted on a genre-by-genre basis. FIG. 7 illustrates one example of the broadcasting channels sorted on the genre-by-genre basis. In this example, the genres are sorted based on the third digit of the channel numbers, i.e., the numerals of 100s (100 - 109). A configuration of the channels sorted on the genre-by-genre basis as in FIG. 7 is given in many cases for the user's convenience or for arrangement on the side of a service provider. As a result, according to the receiving apparatus 1, also when the channel scheduling is changed, such a possibility is high that the channel, which is comparatively close to a desire of the user, is selected though not as desired by the user.

Note that the "character representing an arbitrary numeral" may be used in whichever digit of the numerals specifying the channel number. As a matter of course, the "character representing an arbitrary numeral" is not employed, and yet the broadcasting channel may be designated. For example, when pressing keys "2", "11" and "11", it follows that the channel specified by "2xx", i.e., "200s" ("200 - 209") is selected as the viewable channel for the first time. In this case, two ways of implementation are considered.

The first implementation is that the third digit is determined to be "11" = "x" at a point of time when pressing the two keys "2" and "11", and the channel selecting operation is finished. The second implementation is that when the number key, e.g., "3" is pressed as the third digit after standing by for the input of the third digit, the viewable channel is selected from within the channel numbers "203", "213", "223", "243", "253", "263", "273", "283" and "293". The receiving apparatus 1 may be configured to adopt either of these implementations and may also be configured so that the user can select the first designation and the second designation in menu on the setting screen etc.

FIG. 8 illustrates one example of how the one-touch channel selection keys are allocated. FIG. 8 is also called a one-touch channel selection table. The one-touch channel selection key will hereinafter be simply referred to as the one-touch key. FIG. 8 is a definition example of defining, with respect to the one-touch channel selection key, "which channel is selected when pressing this key. In FIG. 8, the numerals 1 through 6 given in the leftmost column and the numerals 7 through 12 given in the fourth column indicate the number keys "1" through "12" used as the one-touch keys. Then, the numerals given in respective rows in the second column (channels) of the table in FIG. 8 indicate the broadcasting channel numbers allocated to the number keys "1" through "6". Similarly, the numerals given in respective rows in the fifth column (channels) of the table in FIG. 8 indicate the broadcasting channel numbers allocated to the number keys "7" through "12".

Moreover, pieces of data given in the respective rows in the third column of the table in FIG. 8 indicate broadcasting contents (names of the broadcasting stations) of the broadcasting channels allocated to the number keys "1" through "6". Similarly, pieces of data given in the respective rows in the sixth column of the table in FIG. 8 indicate broadcasting contents of the broadcasting channels allocated to the number keys "7" through "12". Note that the symbol "-" indicates "undefined" in FIG. 8. In the case of using the number key "k" as the one-touch key, this key will hereinafter be referred to as the one-touch key "k".

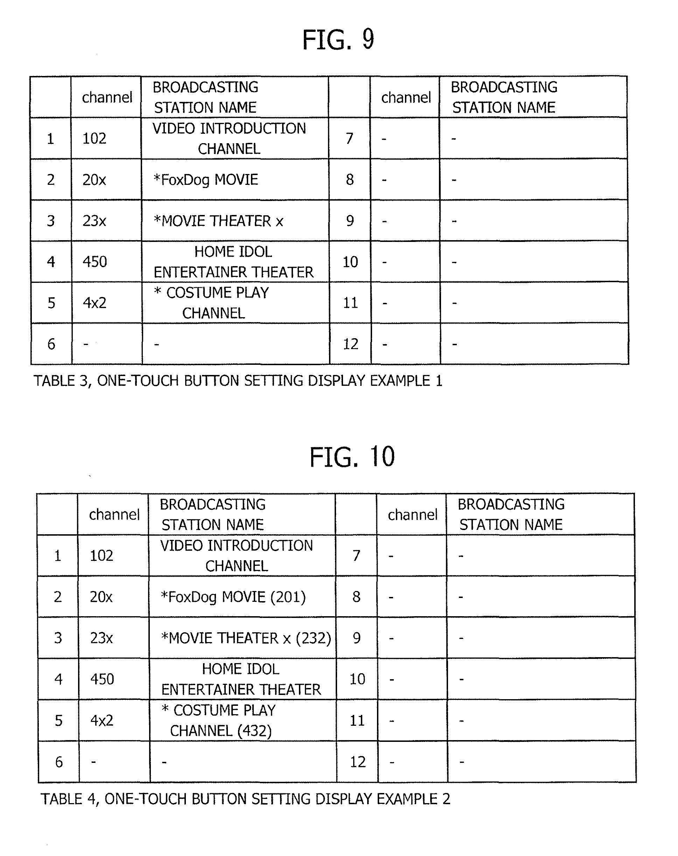

The one-touch key as in FIG. 8 can be also designated by using the "character representing an arbitrary numeral". FIG. 9 is a definition example in which the designation of the one-touch key includes the "character representing an arbitrary numeral". The table in FIG. 9 can be also called the one-touch channel selection table.

Herein, the symbol "x" in the one-touch keys "2", "3" indicates a value corresponding to an arbitrary numeral. Further, the broadcasting station names initiated with "*" in the "broadcasting station name" field represent the broadcasting stations in the designation containing the "character representing an arbitrary numeral", i.e., "x". Any inconvenience might not , however, be caused without the representation initiated with "*". The representation initiated with "*" is one example of a contrivance for enhancing the convenience of the user. For example, in the case of displaying the setting example as in FIG. 9 on the screen of the unillustrated display device, the user gets easy to recognize that the "character representing an arbitrary numeral", i. e. , "x" is contained in the setting of the one-touch key. In the process of the receiving apparatus 1, however, it does not mean that the character for indicating the broadcasting station is limited to the symbol "*" in the designation containing the "character representing an arbitrary numeral", i.e., "x". For example, other symbols such as "#" and "!" or other characters may also be employed.

FIG. 10 is another display example of setting the one-touch keys. The table in FIG. 10 can be also called the one-touch channel selection table. In the "broadcasting station name" field, the broadcasting station names initiated with "*" in the "broadcasting station name" field represent the broadcasting stations in the designation containing the "x", and the broadcasting station names are suffixed with the actual channel numbers of the broadcasting stations.

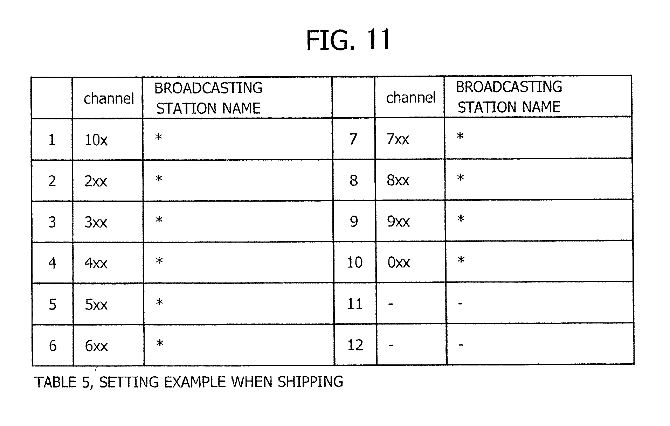

FIG. 11 is a setting example of the one-touch channel selection table in the receiving apparatus 1 when shipped from a factory. In FIG. 11, the symbol "*" is prefixed to the broadcasting station names, this is because the actually viewable channels do not become clear till the user acquiring the receiving apparatus 1 scans the channels (channel scan) after settling the viewing subscription. Herein, the "channel scan" connotes a process of examining whether there are the broadcasting waves or not in such a way that the receiving apparatus 1 etc sequentially selects the receivable channels. If the receivable broadcasting waves are detected, the information on the broadcasting station corresponding to the broadcasting waves is registered in the receiving apparatus 1. Note that the receivable channel information at the setup receiving point of the receiving apparatus 1 is called a service list.

Accordingly, in the receiving apparatus 1 undergoing the setting in FIG. 11 and being shipped, it follows that "*video introduction channel (102) " etc is displayed at a point of time when executing the channel scan (see FIG. 10). It might happen that none of the viewable channels exist in the designated channels depending on the setting of the service provider who provides the broadcasting programs and the subscription plan of the user. If the viewable channels do not exist in the designated channels, the symbols "*" are displayed intactly in the "broadcasting station name" field in FIG. 11. As a result, it is displayed that the designation containing "x" does not correspond to the viewable channel. Alternatively, in such a case, a special character string "*---", "*not viewable" etc may be displayed.

It could not hitherto be determined before being shipped which channel number would have been valid for designation, and hence the receiving apparatus 1 was shipped by setting the one-touch key in a non-designation status. As a result of the non-designation of the one-touch key, the user felt troublesome for designating the one-touch key in some cases. If being the receiving apparatus 1 shipped after applying the setting in FIG. 11, the channel corresponding to the allocation in FIG. 11 is set in each one-touch key at the point of time when the user performs the channel scan. With this contrivance, the user can enjoy the convenience owing to the channel scan over the setting in FIG. 11 without taking trouble to designate the one-touch key.

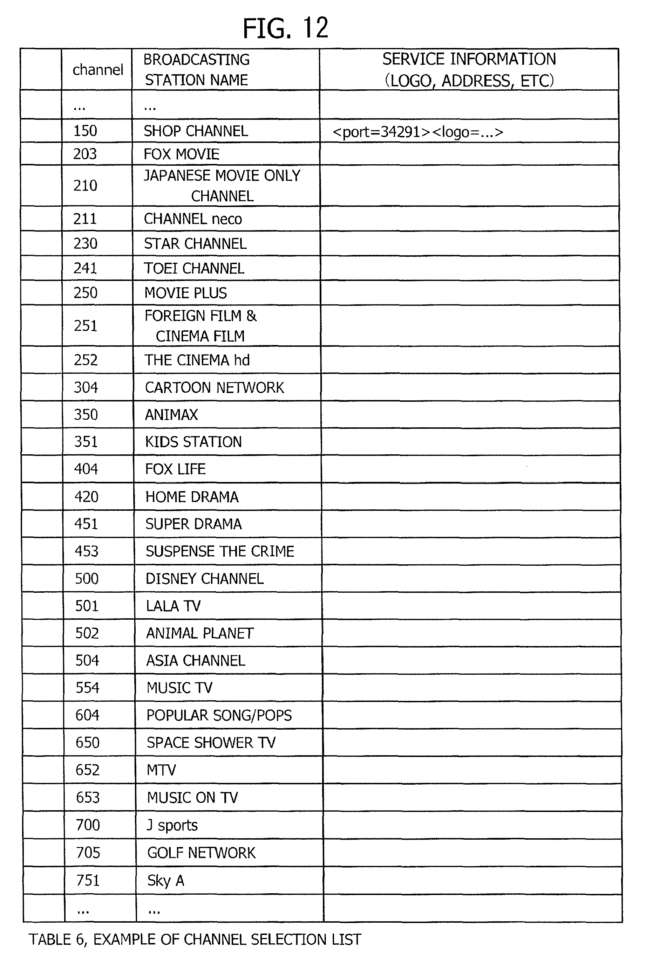

FIG. 12 is an example of the channel selection list (service list) containing the receivable broadcasting stations. In the example of FIG. 12, the channel selection list contains channels, broadcasting station names and service information. The "channel" represents the channel number of the receivable broadcasting channel. Further, the "broadcasting station name" denotes a nomenclature of the broadcasting station specified by the broadcasting channel number. Moreover, the "service information" may contain, in addition to the broadcasting station name, items of information such as a logo, license information, accounting information and an age limit to viewing, etc. The channel selection list is stored in, e.g., the NVRAM 23 etc of the receiving apparatus 1.

### <Processing Flow>

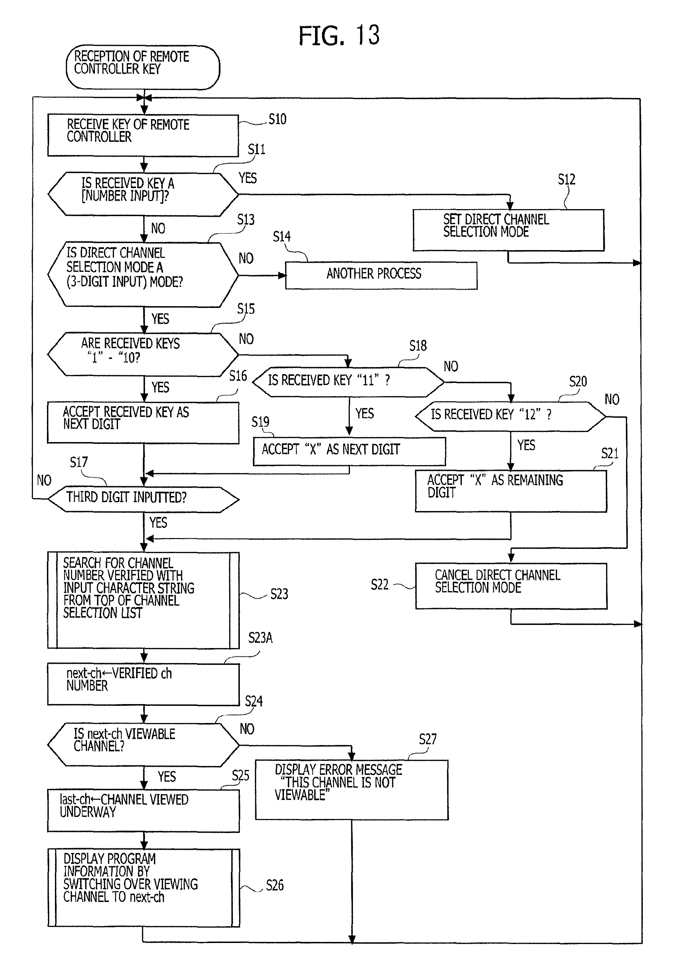

A processing flow of the receiving apparatus 1 according to the example 1 will hereinafter be described with reference to FIGS. 13 - 18. Processes given in the following processing flow are the processes that are carried out when the CPU 20 of the receiving apparatus 1 executes the computer program deployed in the executable manner on the RAM 21, the ROM 22, etc. Such being the case, the following discussion will proceed on the assumption that the receiving apparatus 1 executes the following processes.

FIG. 13 illustrates a processing example of the direct channel selection by the receiving apparatus 1. Herein, the "direct channel selection" connotes the channel selection that involves specifying the number indicating the broadcasting channel by inputting the numerals. A typical example of the direct channel selection is the designation that involves inputting a string of numbers indicating the channel by operating the number key.

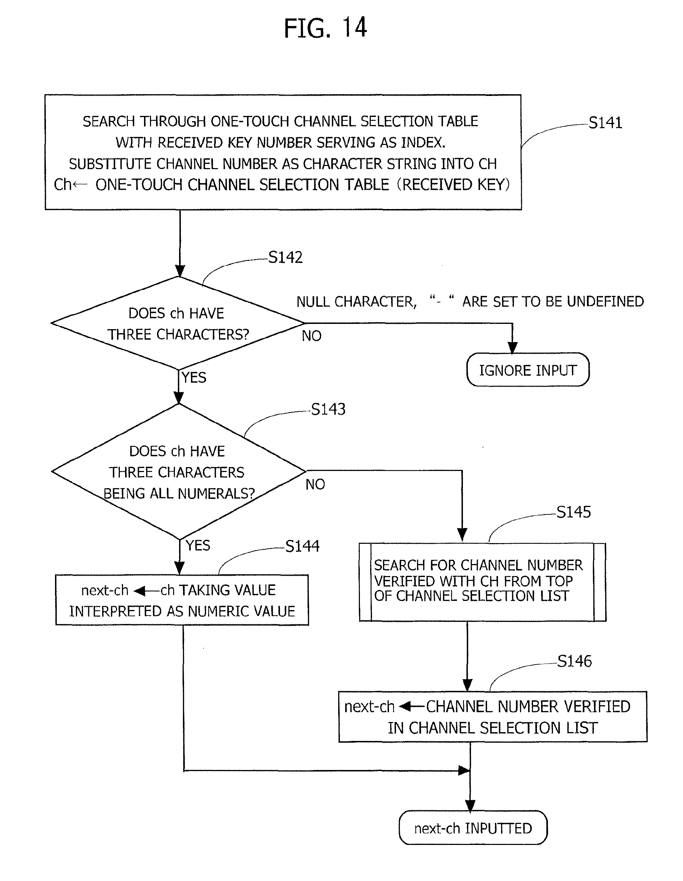

In the processes of FIG. 13, the processes in S10 - S13 are the same as C10 - C13 in FIG. 1, and hence their explanations are omitted. If the present channel selection mode is determined in S13 not to be the direct channel selection mode, the receiving apparatus 1 executes another process (S14) . An in-depth description of another process will be made later on with respect to FIG. 14. Note that the CPU 20 executes the process in S10 by way of one example of an accepting unit. Further, the CPU 20 executes the process in S10 by way of one example of a simple channel selection accepting unit. Still further, the CPU 20 executes the processes in S10 - S17 by way of one example of a channel accepting unit. Moreover, the CPU 20 executes the processes in S23 - S27 by way of one example of a channel selection unit.

Whereas if the present channel selection mode is determined in S13 to be the direct channel selection mode, the receiving apparatus 1 executes the following direct channel selection process (S15 - S22). In the direct channel selection mode, the receiving apparatus 1 determines whether the received key is any one of the numerals "1" through "10" or not (S15). Then, if the received key is any one of the numerals "1" through "10", the receiving apparatus 1 executes the processes in S16 and S17. The processes in S16 and S17 are the same as C16 and C17 in FIG. 1, and hence their explanations are omitted. Then, if the third digit is determined in S17 not to be inputted, the receiving apparatus 1 loops back the control to S10, and repeats the key input process. Whereas if the third digit is inputted, the receiving apparatus 1 advances the control to S23.

Further, whereas if the received key is not any one of the numerals "1" through "10", the receiving apparatus 1 determines whether the received key is the numeral "11" or not (S18). Then, if the received key is the numeral "11", the receiving apparatus 1 accepts a character "x" as the next digit (S19). Subsequently, the receiving apparatus 1 advances the control to S17. This is the case in which the user designates the "character representing an arbitrary numeral" in the direct channel selection.

Moreover, if the received key is determined in S18 not to be the numeral "11", the receiving apparatus 1 determines whether the received key is the numeral "12" or not (S20). Then, if the received key is the numeral "12", the receiving apparatus 1 accepts "x" as the remaining digits. Namely, the receiving apparatus 1 sets the character "x" in all of the remaining digits (S21). Then, the receiving apparatus 1 advances the control to S23. This is the case where the user designates the "character representing an arbitrary numeral" in all of the remaining digits in the direct channel selection. Moreover, if the received key is determined in S20 not to be the numeral "12", the receiving apparatus 1 cancels the direct channel selection mode (S22), and loops back the control to S10. This is the case where the user cancels the direct channel selection by operating the number keys excluding the number key "1" through the number key "12" in the direct channel selection.

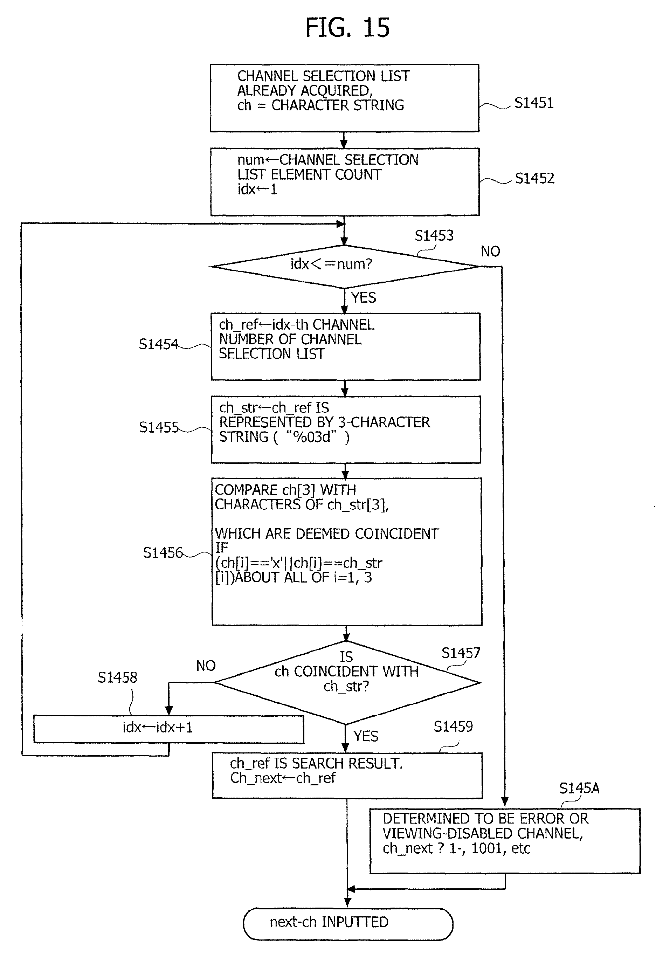

Next, the receiving apparatus 1 searches for the channel number corresponding to the input character string from the top of the channel selection list (see FIG. 12) (S23). What the channel number corresponds to the input character string is also referred to as the channel number being verified with the input character string. Further, the process in S23 is also termed a verifying process. Details of the verifying process will be described later on with reference to FIG. 15. Note that the process in S23 is the process of searching for the channel number corresponding to the input character string from the top of the channel selection list, however, the channel selection list is organized in the sequence from the smallest to the largest of the channel numbers, and hence it follows that the relevant channel is selected from the top of the broadcasting channels corresponding to the channel designation containing the "character representing an arbitrary numeral" in S23.

Then, the receiving apparatus 1 stores the 3-digit number obtained by the process in S23 as the broadcasting channel number in the parameter, e.g. , "next-ch" indicating the next channel to be selected (S23A). Steps S24 - S27 are processes of determining whether the broadcasting channel stored in "next-ch" is the viewable channel or not. The processes in S24 - S27 are the same as C24 - C27 in FIG. 1, and hence their explanations are omitted. Note that the CPU 20 executes the processes in S24 - S27 by way of one example of a second control unit.

With a contrivance of enabling the designation of the keys "11" and "12" for designating the "character representing an arbitrary numeral" in the direct channel selection as in S10 - S17 of FIG. 13, the relevant broadcasting channel can be specified by the processes in S23 - 527, whereby the user can easily specify the desired channel from the multichannel broadcasting. Further, for instance, as in S23, the relevant channel is selected from the top of the broadcasting channels corresponding to the channel designation containing the "character representing an arbitrary numeral", so that the user is easy to grasp the channel selected based on the channel designation containing the "character representing an arbitrary numeral". For example, in the process of S23, if the channel selected for the first time is not the desired channel, the user can sensuously recognize and grasp how the broadcasting channels are searched for by roughly sorting the same numerals such as 200s and 300s in a way that scrolls up the broadcasting channel numbers with the channel number up-key 96. Moreover, the user can attain the search based on the same genre by searching for the channels with the rough sorting of the same numbers, i.e., the channels that are of the same category in terms of, e.g., 100s.

FIG. 14 is a flowchart illustrating details of another process (S14 in FIG. 13) other than the direct channel selection. This process is a process, which is also called the one-touch channel selection. The one-touch channel selection is also called a simple channel selection. Herein, the receiving apparatus 1 searches through a one-touch channel selection table (see FIGS. 8 - 10, etc) with the received key number serving as an index. Then, the receiving apparatus 1 substitutes the channel number in the form of the character string obtained from the one-touch channel selection table into the parameter "ch" (S141).

Then, the receiving apparatus 1 determines whether a value of parameter "ch" is a 3-character string or not (S142). If the value of parameter "ch" is not the 3-character string, the receiving apparatus 1 ignores the input. For example, a null character (NULL), a symbol "-", etc are ignored.

Whereas if the value of parameter "ch" is the 3-character string, the receiving apparatus 1 determines whether the three characters defined as the value of the parameter "ch" are all numerals or not (S143). If the three characters defined as the value of the parameter "ch" are all numerals, the receiving apparatus 1 stores the three characters as the value of the parameter "ch" in the parameter, e.g., "next-ch" indicating the channel to be selected next by way of the broadcasting channel number (S144).

Further, if a character other than the numerals is contained in any one of the the three characters defined as the value of the parameter "ch", the receiving apparatus 1 searches for the channel number corresponding to the input character string from the top of the channel selection list (see FIG. 12) (S145). The process in S145 is the verifying process as in the case of the process in S23 of FIG. 13. An in-depth description of the verifying process will be made later on with respect to FIG. 15. Then, the receiving apparatus 1 stores the the three characters defined as the value of the parameter "ch" in the parameter, e.g., "next-ch" indicating the channel to be selected next by way of the broadcasting channel number (S146). The CPU 20 executes the processes in S145 - S146 by way of one example of a first control unit. Note that the process in S145 is the process of searching for the channel number corresponding to the input character string from the top of the channel selection list, however, the channel selection list is organized in the sequence from the smallest to the largest of the channel numbers, and hence it follows that the relevant channel is selected from the top of the broadcasting channels corresponding to the channel designation containing the "character representing an arbitrary numeral" in S145.

With the contrivance of enabling the designation of the keys "11" and "12" for designating the "character representing an arbitrary numeral" in the channel selection based on the one-touch button, the relevant broadcasting channel can be specified by the processes in S141 - S146, whereby the user can easily specify the desired channel from the multichannel broadcasting. Further, for instance, as in S145, the relevant channel is selected from the top of the broadcasting channels corresponding to the channel designation containing the "character representing an arbitrary numeral", so that the user is easy to grasp the channel selected based on the channel designation containing the "character representing an arbitrary numeral". For example, in the process of S145, if the channel selected for the first time is not the desired channel, the user can sensuously recognize and grasp how the broadcasting channels are searched for by roughly sorting the same numerals such as 200s and 300s in a way that scrolls up the broadcasting channel numbers with the channel number up-key 96. Moreover, the user can attain the search based on the same genre by searching for the channels with the rough sorting of the same numbers, i.e., the channels that are of the same category in terms of, e.g., 100s. As in S145, however, instead of selecting the relevant channel from the top of the broadcasting channels corresponding to the channel designation containing the "character representing an arbitrary numeral", the relevant broadcasting channel may also be selected based on other rules. For instance, the broadcasting channel may be selected reversely from the end of the broadcasting channels corresponding to the channel designation containing the "character representing an arbitrary numeral".

FIG. 15 illustrates details of the verifying process (S23 in FIG. 13, S145 in FIG. 14). In this process, it is assumed that the receiving apparatus 1 will have already stored the channel selection list in, e.g., the RAM 21, the NVRAM 23, etc. Further, it is also assumed that the receiving apparatus 1 will have already set the string of three characters in the parameter "ch". Herein, the 3-character string is, e.g., in the case of the process in FIG. 13, the 3-character string inputted by operating the number keys. Moreover, the 3-character string is the 3-character string obtained from, e.g., the one-touch channel selection table in the case of the process in FIG. 14 (S1451).

Subsequently, the receiving apparatus 1 sets an element count of the channel selection list in a parameter "num" (S1452). Further, the receiving apparatus 1 sets an initial value "1" in a parameter "idx". The parameter "idx" is a parameter indicating a present position on the list when scanning the channel selection list.

Then, the receiving apparatus 1 determines whether the parameter "idx" is equal to or smaller than the parameter "num" (S1453). If the parameter "idx" is equal to or smaller than the parameter "num", the receiving apparatus 1 sets the idx-th channel number on the channel selection list in a parameter "ch_ref" (S1454). Subsequently, the receiving apparatus 1 converts a value of the parameter "ch_ref" into a notation of the character string, and sets the converted character string in a parameter "ch_str" (S1455).

Then, the receiving apparatus 1 compares the 3-character value of the parameter "ch" with the 3-character value of the parameter "ch_str" (S1456). To be specific, the receiving apparatus 1 determines as to whether or not "ch[i] == ch_str[i]" is established with respect to each "i"=1, 2, 3. Herein, the symbol "==" notates determining whether the two values are coincident or not. In the process of S1456, however, if the characters (the 3 characters in this example) contained in the parameter "ch[i]" contain "x", the comparison with "ch_str[i]" is not made, and the processing is handled on the assumption that "ch[i]" is coincident with "ch_str[i]". This is because "x" is the "character representing an arbitrary numeral".

Then, if the 3-character value of the parameter "ch" is not coincident with the 3-character value of the parameter "ch_str" (the case of NO in S1457), the receiving apparatus 1 counts up the parameter "idx" (S1458) and loops back the control to S1453. Whereas if the 3-character value of the parameter "ch" is coincident with the 3-character value of the parameter "ch_str" (the case of YES in S1457), the receiving apparatus 1 deems the value of the parameter "ch_ref" as a search result and saves this value in a parameter "ch_next" (S1459).

On the other hand, if the parameter "idx" is determined in S1453 to exceed the parameter "num", the receiving apparatus 1 deems that the 3-character string set in the parameter "ch" is error designation or deems that the corresponding channel is the viewing-disabled channel. In this case, the receiving apparatus 1 may set, e.g., -1, 1001, etc in the parameter "ch_next" (S145A).

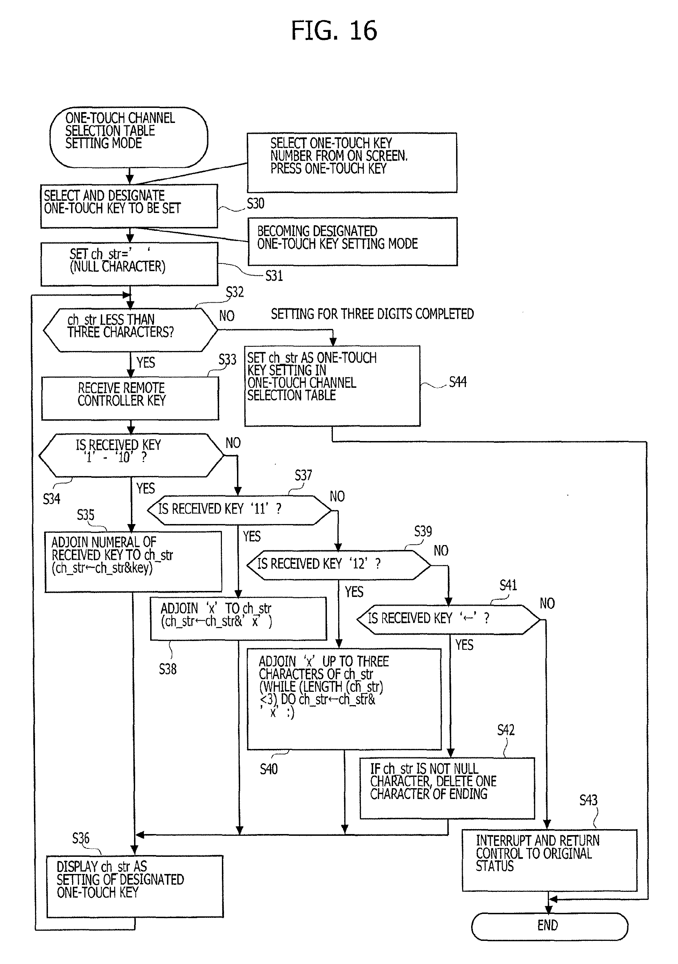

FIG. 16 is an example 1 of the setting process of the one-touch channel selection table. In this setting process, the receiving apparatus 1 accepts the user' s selection or user' s designation by use of the one-touch key to be set (S30). Herein, the user carries out, e.g., the operation of selecting the one-touch key number on the screen of the unillustrated display device or the operation of designating the one-touch key on the remote controller 9. Thereupon, the receiving apparatus 1 comes to a mode for setting the designated one-touch key.

Next, the receiving apparatus 1 initializes the parameter "ch_str" and sets " " (null character) (S31). The null character is also called "NULL". Then, the receiving apparatus 1 determines whether or not a character count set in the parameter "ch_str" is less than the 3 characters (S32).

Next, the receiving apparatus 1 receives the operated key through a transmission signal from the remote controller 9 by the user's operation (S33). In the case of receiving the signal generated due to the key operated on the remote controller 9, this operation will hereinafter be expressed simply as receiving the key. Then, the receiving apparatus 1 determines whether the received key is any one of the numerals "1" through "10" or not (S34). The received signal represents the number key "k" (k is a numeral), in which case this shall be simply referred to as "the key is "k"".

Then, if the received key is any one of the numerals "1" through "10", the receiving apparatus 1 additionally sets the numeral indicating the key received in S33 in the parameter "ch_str" (S35). The "additional setting" connotes adding the numeral to the rear of the character string that has already been set in the parameter "ch_str" and is also called "adjoining". Then, the receiving apparatus 1 advances the control to S36.

Further, if the received key is none of the numerals "1" through "10", the receiving apparatus 1 determines whether the received key is the numeral "11" or not (S37). Then, if the received key is the numeral "11", the receiving apparatus 1 additionally sets the character "x" in the parameter "ch_str" (S38). Subsequently, the receiving apparatus 1 advances the control to S36.

Moreover, whereas if the received key is not the numeral "11", the receiving apparatus 1 determines whether the received key is the numeral "12" or not (S39). Then, if the received key is the numeral "12", the receiving apparatus 1 additionally sets the character "x" till the character count set in the parameter "ch_str" reaches a predetermined character count, e.g., the three characters (S40). Subsequently, the receiving apparatus 1 advances the control to S36.

Moreover, whereas if the received key is not the numeral "12", the receiving apparatus 1 determines whether the received key is a delete key (return one character) or not (S41). Then, if the received key is the delete key, the receiving apparatus 1 deletes one character of the ending of the characters set in the parameter "ch_str" (S42). Subsequently, the receiving apparatus 1 advances the control to S36. Further, whereas if the received key is determined in S41 not to be the delete key, the receiving apparatus 1 interrupts processing (S43) and finishes the processes in FIG. 16.

Then, the receiving apparatus 1 displays the parameter "ch_str" as the setting of the designation one-touch key (S36). Subsequently, the receiving apparatus 1 loops back the control to S32. Moreover, if the character count set in the parameter "ch_str" is determined in S32 to become the three characters, the receiving apparatus 1 sets the value of the parameter "ch_str" in the one-touch channel selection table as the setting of the one-touch key designated in S30 (S44).

As described above, when designating the one-touch key, respective entries of the one-touch channel selection table are set and saved in, e.g., the NVRAM 23 etc.

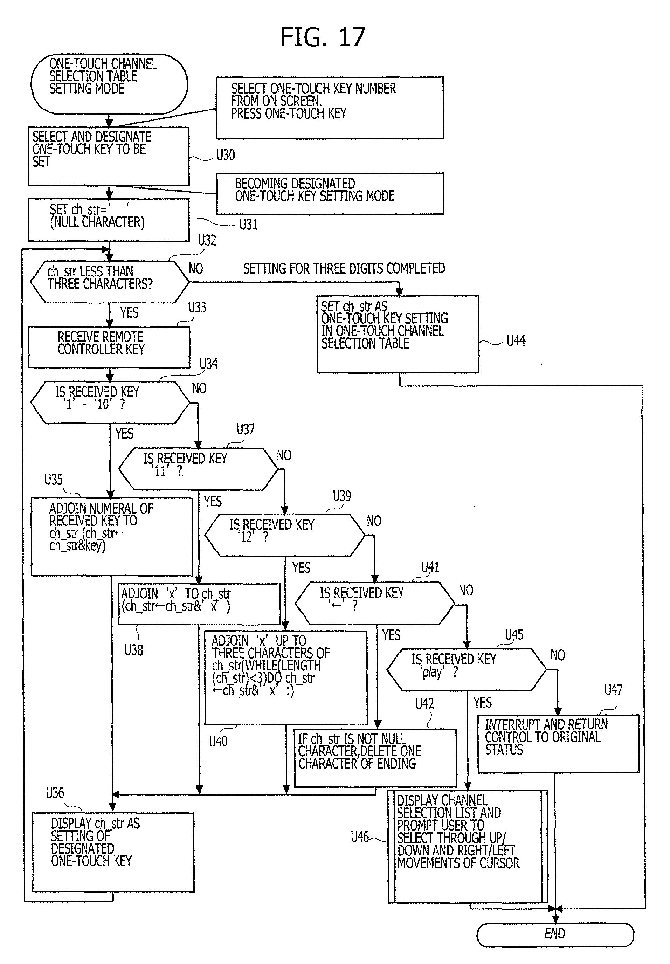

FIG. 17 is an example 2 of the setting process of the one-touch channel selection table. In this setting process, processes in U30 - U44 are the same as S30 - S44 in FIG. 16, and hence their explanations are omitted. In the processes of FIG. 17, if the received key is a "play" key, a process of prompting the user to select a channel on the screen is added. Namely, if the received key is determined in U41 not to be the delete key, the receiving apparatus 1 determines whether the received key is the "play" key or not (U45). This determination may involve using a key other than the "play" key. In the example 1, if the received key the "play" key, the receiving apparatus 1 displays the channel selection list (see FIG. 12) on the screen. Then, the receiving apparatus 1 receives a designation to move the cursor up/down and right/left from the channel selection list displayed on the screen. Subsequently, upon pressing a determination key etc, the receiving apparatus 1 determines the channel selected by the user. The receiving apparatus 1 sets the channel number of the channel selected by the user in the one-touch key (U46). Whereas if the received key is determined in U45 not to be the"play" key, the receiving apparatus 1 interrupts processing.

As described above, the receiving apparatus 1 accepts the channel designation containing the symbol, e.g., "x" corresponding to one numeral selected from the plurality of numerals or the numeral string selected from the plurality of numerals. As for this symbol, one character "x" is set by, e.g., the number key "11". Further, "x" is set up to the ending of the character string with the channel being specified by the number key "12". Moreover, the channel designation containing "x" may also be attained by designating the one-touch key. Still further, the channel designation containing "x" may also be the direct designation in which the broadcasting channels of the respective digits are key-inputted. Thereupon, the receiving apparatus 1 specifies the broadcasting channel with "x" being set as, e.g., an arbitrary numeral. Then, if there is the plurality of relevant broadcasting channels, it may be sufficient for the receiving apparatus 1 to select, e.g., the top broadcasting channel with the smallest numeral. Conversely, the receiving apparatus 1 may also select, e.g., the ending broadcasting channel with the largest numeral. The receiving apparatus 1 may, however, display a list of the plural receivable broadcasting channels. It may be sufficient that the receiving apparatus 1 prompts the user to select the desired broadcasting channel from the broadcasting channels displayed in the form of the channel list. A criterion for selecting the specified broadcasting channel from the plurality of broadcasting channels corresponding to the designation containing the arbitrary numeral, is an example of predetermined criterion.

The designation such as this enables the user to simply select the desired channel in the IP TV, the terrestrial digital broadcasting, the satellite broadcasting the cable TV broadcasting in which the multiplicity channels can be used. Furthermore, even when changing the broadcasting channel scheduling, the user is easy to search for the broadcasting channel after the broadcasting channel scheduling has been changed owing to the designation using 0**, 1**, etc in the broadcasting service in which the genres of the broadcasting channels are sorted by the numeral of the third digit as in the case of less than 100s, 100s, 200s, ..., 900s. Moreover, there rises a possibility that it may be unnecessary to change also in the case of setting 0**, 1**, etc on the one-touch key.

The receiving apparatus 1 realizes the following advantages by the slight change of the operation for the channel designation in receiving the multichannel broadcasting.
(1) A first advantage is to make the user easier to memorize the broadcasting channel numbers. If memorizing the two digits of the three digits, the user can designate the channel with accuracy to some extent in many cases. In the processing of the receiving apparatus 1, however, it does not mean that the broadcasting channel number is limited to the three digits. Namely, the channel selection process of the broadcasting channel, which is based on the designation containing the arbitrary numerals as exemplified by the receiving apparatus 1, may be applied to the broadcasting channel of four digits or more.
(2) A second advantage is that even when the user does not explicitly perform the initial setting of the one-touch key, the user can enjoy the convenience thereof.
(3) A third advantage is that even when the service for the broadcasting channel numbers allocated to the one-touch keys expires do to, e.g., the change of the channel scheduling, the receiving apparatus 1 can provide the natural operation without displaying the error dialog etc or alternatively together with displaying a slight-error dialog such as skipping the channel.

### [Example 2]

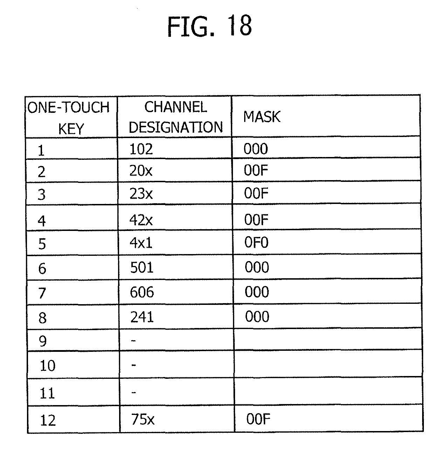

The receiving apparatus 1 according to a second working example (example 2) will be described with reference to FIGS. 18 through 20. In the example 1, with respect to the broadcasting channel designation containing "x" defined as the "character representing an arbitrary numeral", the numerals indicating the broadcasting channels of the channel selection list are converted into the character strings, and the relevant channel (target channel) is searched for by making the comparison between the character strings.

The example 2 exemplifies a process of searching for the relevant channel not by comparing the character strings but by processing the numeric values, e.g., BCD (Binary Coded Decimal) codes. The processes in the example 2 are substantially the same as those in the example 1 except a point of using the BCD codes. Such being the case, the same components as those in the example 1 are marked with the same symbols as those in the example 1, and their explanations are omitted. Further, the hardware configuration (FIGS. 3 - 6, etc) of the example 1 is to be applied as it is.

In the example 2, with respect to the process of searching for the relevant channel in the designation containing "x" defined as the "character representing an arbitrary numeral", the numeral of the digit, indicated by "x", of the broadcasting channel is described by a hexadecimal number "0xF". Moreover, the digits other than the digit corresponding to "x" are described by the BCD codes. For example, a 3-digit channel notated by "1x9" is expressed by "0001 1111 1001" in bit notation, i. e. , treated as "0x1F9". This type of processing is not, however, limited to the BCD codes, and other codes may also be used.

FIG. 18 is an example of the one-touch channel selection table according to the example 2. The one-touch channel selection table in the example 2 has a "one-touch key designation" field, a "channel designation" field and a "mask" field. In the one-touch channel selection table, the designation of the one-touch key uses a numeral indicating the one-touch key. The numeral indicating the one-touch key is the numeral of the number key serving as the one-touch key.

Moreover, the designation of the channel uses information for designating the channel allocated to the one-touch key. For instance, a channel number such as 102, etc is designated. Furthermore, the designation containing "x" defined as the "character representing an arbitrary numeral", e.g., the designation such as "20x" is allowable. The channel designation is, however, described by the BCD codes. Further, the digit of "x" involves setting not the character "x" but the hexadecimal number "0xF".

Moreover, a mask corresponding to the channel designation is set in the "mask" field. A mask value corresponding to the digits other than the character "x" is given by "0x0" (0000). Further, a mask value "0xF" (1111) is set in the digit of the character "x".

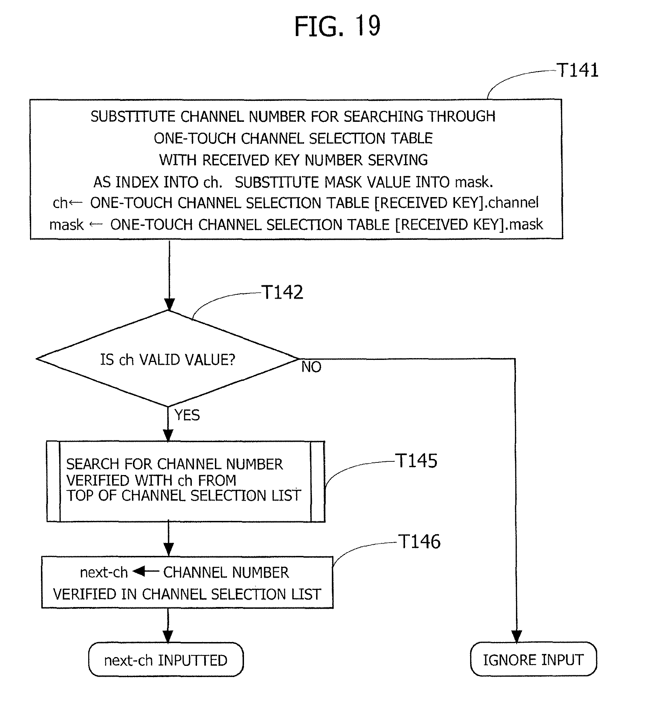

FIG. 19 corresponds to FIG. 14 in the example 1 and is an example of details of another process (S14 in FIG. 13) other than the direct channel selection. In this process, the receiving apparatus 1 searches through the one-touch channel selection table (see FIG. 18) with the received key number serving as the index. Then, the receiving apparatus 1 substitutes the channel number as a word value (BCD code) obtained from the one-touch channel selection table into the parameter "ch" as it is. Further, the mask value added in the way of being associated with the channel number in the one-touch channel selection table is acquired and substituted into a parameter "mask" (T141).

Then, the receiving apparatus 1 determines whether the value of the parameter "ch" is valid or not (T142). Herein, in the determination about the validity, if each digit takes the numeric value (i.e., the decimal numbers "0 - 9") of the BCD codes or "0xF", the value may be determined to be valid. Then, if the value of the parameter "ch" is determined in T142 to be an invalid value, the receiving apparatus 1 may ignore the input from the remote controller 9.

Whereas if the value of the parameter "ch" is determined to be a valid value, the receiving apparatus 1 searches for the channel selection corresponding to the input character string from the top of the channel selection list (see FIG. 12) (T145). Subsequently, the receiving apparatus 1 stores the value of the parameter "ch" as the broadcasting channel number in, e.g. , the parameter "next-ch" indicating the channel to be selected next (T146).

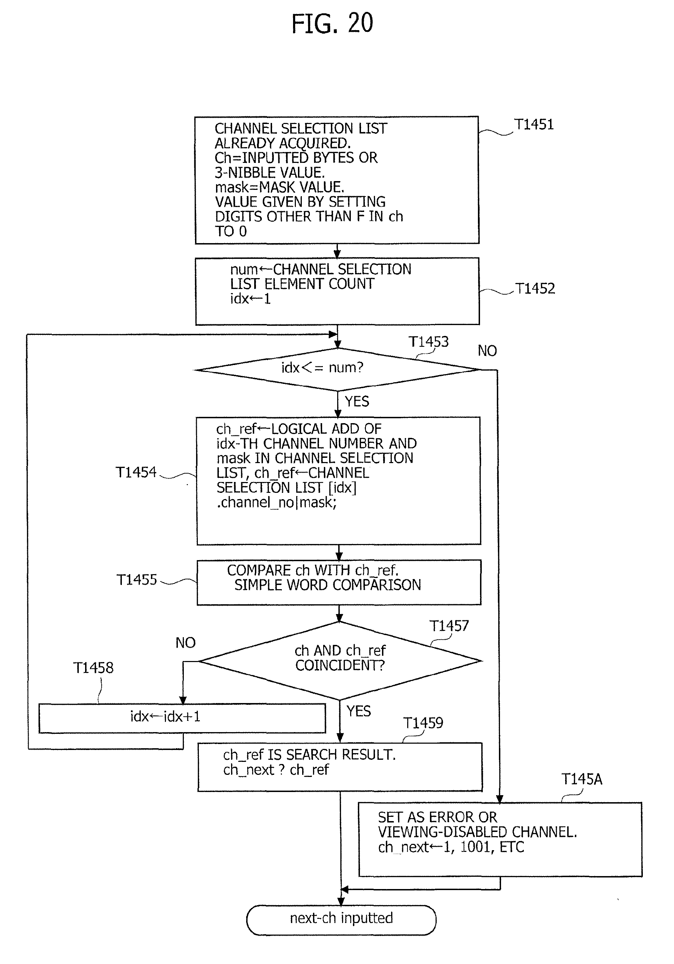

FIG. 20 illustrates details of a verifying process (T145 in FIG. 19). In this process, it is assumed that the receiving apparatus 1 will already have stored the channel selection list in, e.g., the RAM 21, the NVRAM 23, etc. The inputted channel value is a 3-digit decimal numeric value obtained from the one-touch channel selection table in the case of the processing in, e.g., FIG. 14. Further, it is assumed that the mask value obtained from the one-touch channel selection table is set in the parameter "mask" (T1451). The mask value may, however, be generated corresponding to the 3-digit decimal numeric value and set in the parameter "mask" when executing the process in T145 without retaining the mask value in the one-touch channel selection table.

Moreover, if the inputted channel value is set in the case of the direct channel selection, e.g., set in the processing of FIG. 13, the numeric value "0xF" is set in the digit of "x" by way of the channel designation. Moreover, the mask value may be generated corresponding to the inputted value. For example, if one of the numeric values "0 - 9" is set by the number key in one digit, the mask value corresponding to this digit may be set to "0x0". Further, if "x" is set by the number key "11" in one digit, the mask value corresponding to this digit may be set to "0xF". Moreover, if "x" is set by the number key "12" in the plurality of digits, the mask value corresponding to each of the digits may be set to "0xF".

Then, the receiving apparatus 1 sets the element count of the channel selection list in the parameter "num". Further, the receiving apparatus 1 sets the initial value "1" in the parameter "idx" (T1452). The parameter "idx" is the parameter indicating the present position on the list when scanning the channel selection list.

Subsequently, the receiving apparatus 1 determines whether the parameter "idx" is equal to or smaller than the parameter "num" (T1453). If the parameter "idx" is equal to or smaller than the parameter "num", the receiving apparatus 1 sets logical add of the idx-th channel number and the mask value on the channel selection list in the parameter "ch_ref" (T1454). Accordingly, the numeric value of the channel number is set as it is in the digit with the mask value being "0x0" in the channel numbers of the channel selection list. On the other hand, the numeric value "0xF" is set in the digit with the mask value being "0xF" in the channel numbers of the channel selection list.

Then, the receiving apparatus 1 compares the value of the parameter "ch" with the value of the parameter "ch_ref" (T1455). Herein, simply the word value of the parameter "ch" may be compared with the word value of the parameter "ch_ref". The processes from T1457 to T145A are the same as the processes from S1457 to S145A in FIG. 15, and hence their explanations are omitted.

For example, the description will be made by giving an example where a broadcasting channel "20x" is set in the one-touch key "2". When pressing the one-touch key "2", the receiving apparatus 1 receives the signal of the one-touch key "2" and acquires the broadcasting channel "20x" from the one-touch channel selection table (FIG. 18). Furthermore, it is assumed that the channel number =150 is defined when idx=5; the channel number =203 is defined when idx=6; the channel number =210 is defined when idx=7; and the channel number =221 is defined when idx=8 in the channel selection list (see FIG. 12). Then, 150 is not coincident with the broadcasting channel "20x" when idx=5. Next, ch[3]=0xF is established when idx=6, and hence the "channel number=203" is deemed to be coincident with broadcasting channel "20x". This is because the last digit "3" of the three digits "203" is masked in the process of T1454. As a result, "ch_next=203" is established with respect to the one-touch key "2".

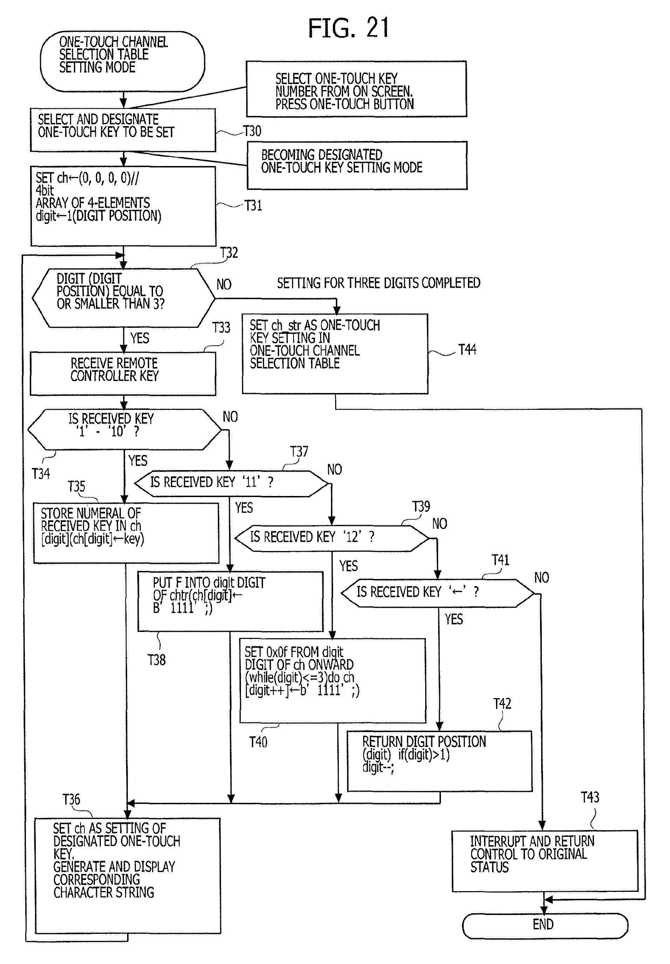

FIG. 21 is a processing example of setting the one-touch channel selection table by the numeric value (e.g., the BCD code). This process is the same as the process in FIG. 16 except using the numeric value of the BCD code etc in place of the character string and setting the numeric value "0xF" in the digit corresponding to the character "x".

In this process, the receiving apparatus 1 accepts the user's selection using the one-touch key to be set or the user's designation (T30). The process in T30 is the same S30 in FIG. 16.

In this process, the receiving apparatus 1 defines the parameter "ch", in which the 4-bit elements are set as an array containing the 4 elements. The receiving apparatus 1 sets, to "0", each of the bits of the respective elements ch[1] - ch[4] of the array "ch". Further, the receiving apparatus 1 sets the initial value "1" in a parameter "digit" (T31).

Next, the receiving apparatus 1 determines whether a value of the parameter "digit" is equal to or smaller than 3. If the value of the parameter "digit" is equal to or smaller than 3, the receiving apparatus 1 receives the operated key through the transmission signal from the remote controller 9 by the user's operation (T33). Then, the receiving apparatus 1 determines whether the received key is any one of the numerals "1" through "10" or not (T34). The key "10" is, however, treated as an input of the numeral "0".

Then, if the received key is any one of the numerals "1" through "10", the receiving apparatus 1 saves the numeral indicating the key received in T33 in the parameter "ch" (T35). The numeral "0" is, however, saved for the key "10".

Moreover, whereas if the received key is none of the numerals "1" through "10", the receiving apparatus 1 determines whether the received key is the numeral "11" or not (T37). Then, if the received key is the numeral "11", the receiving apparatus 1 substitutes the numeric value "0xF" into the parameter "ch" (T38).

Furthermore, whereas if the received key is not the numeral "11", the receiving apparatus 1 determines whether the received key is the numeral "12" or not (T39). Then, if the received key is the numeral "12", the receiving apparatus 1 sets the numeric value "0xF" per digit (element ch[i]) till the numeric value set in the parameter "ch" reaches the three digits (for the three elements) (T40).

Moreover, whereas if the received key is not the numeral "12", the receiving apparatus 1 determines whether the received key is the delete key (return one character) or not (T41). The processes in T41 through T43 and the process in T36 are the same as the processes in S41 through S43 and the process in S36 of FIG. 16.

On the other hand, if the parameter "digit" is determined in T32 to exceed "3", the receiving apparatus 1 sets the value of the parameter (array of 4-bit elements) "ch[]" in the one-touch channel selection table as the set value of the one-touch key (T44). Further, the receiving apparatus 1 calculates the mask value corresponding to the value of the parameter "ch[]" and sets the mask value in the one-touch channel selection table (T45).

As discussed above, when designating the one-touch key, the respective entries of the one-touch channel selection table are set and saved in, e.g., NVRAM 23 etc.

### «Other Modified Examples»

The embodiment described above has discussed the processing example on the assumption of the receiving apparatus 1 that receives the TV broadcasting as in FIG. 3 and the receiving apparatus 1 that receives the IP TV as in FIG. 4. The receiving apparatus 1 is not, however, limited to the receiving apparatus dedicated to the reception of the TV broadcasting. That is, the channel designation containing the "character representing an arbitrary numeral" can be applied to the channel designation when receiving the broadcasting by a variety of information devices such as a personal computer, a mobile phone, a PDA (Personal Digital Assistant) and a smart-phone, etc. Moreover, the broadcasting is not limited to the TV broadcasting, and the broadcasting channel designation containing the "character representing an arbitrary numeral" may be applied to the channel selection of radio broadcasting based on the sounds and the voices.

Moreover, in the examples described above, the "character representing an arbitrary numeral" is specified in the designation of the broadcasting channel. It does not, however, mean that the designation of the broadcasting channel is limited to the use of the "character representing an arbitrary numeral" in terms of the function of the receiving apparatus 1. For example, there may be applied so-called wildcard characters or a general rule of regular expression for pattern matching of the character strings.

For instance, another character, e.g., one character "y" may be substituted instead of enumerating the plurality of "x" by way of two or more arbitrary numerals. Further, in this case, "?", "*", etc may be used in place of "x", "y".

For instance, in the case of a [numeral string], the designation for selecting one numeral contained in the numeral string may be employed. For example, [156] implies any one of the numerals 1, 5 and 6. In this case, the designation of the [numeral string] may involve providing special keys for starting and ending a tag set [], and the start and the end of the tag set [] may be designated by a double stroke, long pressing, etc of the existing key. Then, it may be sufficient that the numerals inputted (inserted) in between the start and the end of the tag set [] are set as the numeral string, and this [numeral string] can be inputted. Similarly, in the case of [!numeral string], the designation for selecting one numeral other than the numerals contained in the numeral string may also be used. For instance, [!12345] implies any one of 6, 7, 9 and 0. In this case also, special keys for starting and ending a tag set [! ] may be provided, and the start and the end of the tag set [! ] may be designated by the double stroke, the long pressing, etc of the existing key. In this case, the numeral not contained in [! ], e.g., one numeral selected from6, 7, 9 and 0 with respect to [!12345] is one example of one numeral selected from the plurality of numerals.

### «Non-transitory Computer-Readable Recording Medium»

A program for making a computer, other machines and devices (which will hereinafter be referred to as the computer etc) realize any one of the functions described above can be recorded on a non-transitory recording medium readable by the computer etc. Then, the computer etc is made to read and execute the program on this non-transitory recording medium, whereby the function thereof can be provided.

Herein, the non-transitory recording medium readable by the computer etc connotes a recording medium capable of accumulating information such as data and programs electrically, magnetically, optically, mechanically or by chemical action, which can be read from the computer etc. Among these non-transitory recording mediums, for example, a flexible disc, a magneto-optic disc, a CD-ROM, a CD-R/W, a DVD, a Blu-ray disc, a DAT, an 8 mm tape, a memory card such as a flash memory, etc are given as those removable from the computer. Further, a hard disc, a ROM (Read-Only Memory), etc are given as the non-transitory recording mediums fixed within the computer etc.

## Claims

1. An information processing apparatus comprising:
accepting means to accept channel designation for designating one channel number specified by a plurality of numerals as a broadcasting channel to be received or channel designation for designating a plurality of channel numbers by a numeral string containing symbols corresponding to the plurality of numerals as the broadcasting channels to be received; and
channel selecting means to select the broadcasting channel that is specified by a predetermined criterion in the broadcasting channels specified by the plurality of channel numbers in the channel designation for designating the plurality of channel numbers.

2. The information processing apparatus according to claim 1, wherein the accepting means includes:
simple channel selection accepting means to accept simple designation with omission of an input operation of the channel designation; and
first control means to select, when the broadcasting channel corresponding to the simple designation accepted by the simple channel selection accepting means is of the channel designation for designating the plurality of channel numbers, the broadcasting channel specified based on the predetermined criterion by the channel selecting means.

3. The information processing apparatus according to claim 1 or 2, wherein the accepting means includes:
channel accepting means to accept the channel designation by an operation of inputting identifying information for specifying the broadcasting channel;
second control means to select, when the broadcasting channel accepted by the channel accepting means is of the channel designation for designating the plurality of channel numbers, the broadcasting channel specified based on the predetermined criterion by the channel selecting means.

4. The information processing apparatus according to any one of claims 1 through 3, wherein the broadcasting channel is selected in accordance with an arrangement sequence of arranging the receivable broadcasting channels in a predetermined order in the broadcasting channels specified by the channel designation for designating the plurality of channels according to the predetermined criterion.

5. An information processing method by which a computer executes:
accepting channel designation for designating one channel number specified by a plurality of numerals as a broadcasting channel to be received or channel designation for designating a plurality of channel numbers by a numeral string containing symbols corresponding to the plurality of numerals as the broadcasting channels to be received; and
selecting broadcasting channel that is specified by a predetermined criterion in the broadcasting channels specified by the plurality of channel numbers in the channel designation for designating the plurality of channels.

6. The information processing method according to claim 5, wherein the accepting channel designation includes:
a simple channel selection of accepting simple designation with omission of an input operation of the channel designation; and
a first control of selecting, when the broadcasting channel corresponding to the simple designation accepted by the simple channel selection is of the channel designation for designating the plurality of channel numbers, the broadcasting channel specified based on the predetermined criterion by the selecting broadcasting channel.

7. The information processing method according to claim 5, wherein the accepting channel designation includes:
accepting channel designation by an operation of inputting identifying information for specifying the broadcasting channel;
a second control of selecting, when the broadcasting channel accepted by the accepting channel designation is of the channel designation for designating the plurality of channel numbers, the broadcasting channel specified based on the predetermined criterion by the selecting broadcasting channel.

8. The information processing method according to claim 5, wherein the broadcasting channel is selected in accordance with an arrangement sequence of arranging the receivable broadcasting channels in a predetermined order in the broadcasting channels specified by the channel designation for designating the plurality of channels according to the predetermined criterion.

9. A program to make a computer execute:
accepting channel designation for designating one channel number specified by a plurality of numerals as a broadcasting channel to be received or channel designation for designating a plurality of channel numbers by a numeral string containing symbols corresponding to the plurality of numerals as the broadcasting channels to be received; and
selecting broadcasting channel that is specified by a predetermined criterion in the broadcasting channels specified by the plurality of channel numbers in the channel designation for designating the plurality of channels.

10. The program according to claim 9, wherein the accepting channel designation includes:
a simple channel selection of accepting simple designation with omission of an input operation of the channel designation; and
a first control of selecting, when the broadcasting channel corresponding to the simple designation accepted by the simple channel selection is of the channel designation for designating the plurality of channel numbers, the broadcasting channel specified based on the predetermined criterion by the selecting broadcasting channel.

11. The program according to claim 9 or 10, wherein the accepting channel designation includes:
accepting channel designation by an operation of inputting identifying information for specifying the broadcasting channel;
a second control of selecting, when the broadcasting channel accepted by the accepting channel designation is of the channel designation for designating the plurality of channel numbers, the broadcasting channel specified based on the predetermined criterion by the selecting broadcasting channel.

12. The program according to any one of claims 9 through 11, wherein the broadcasting channel is selected in accordance with an arrangement sequence of arranging the receivable broadcasting channels in a predetermined order in the broadcasting channels specified by the channel designation for designating the plurality of channels according to the predetermined criterion.
